(19) Europäisches Patentamt
European Patent Office
Office européen des brevets

(11) EP 0 753 030 B1

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(21) Anmeldenummer: **95913131.9**

(22) Anmeldetag: **16.03.1995**

(51) Int Cl.[7]: **C09D 175/00**, C08G 18/08, C08G 18/62, C08K 5/29 // (C09D175/00, 163:00)

(86) Internationale Anmeldenummer:
**PCT/EP95/00974**

(87) Internationale Veröffentlichungsnummer:
**WO 95/26384 (05.10.1995 Gazette 1995/42)**

(54) **WÄSSRIGES MEHRKOMPONENTEN-POLYURETHAN-BESCHICHTUNGSMITTEL, VERFAHREN ZU SEINER HERSTELLUNG UND SEINE VERWENDUNG IN VERFAHREN ZUR HERSTELLUNG EINER MEHRSCHICHTLACKIERUNG**

AQUEOUS MULTI-COMPONENT POLYURETHANE COATING AGENT, METHOD OF MANUFACTURING IT AND ITS USE IN METHODS OF PRODUCING MULTICOAT PAINT COATINGS

AGENT DE REVETEMENT MULTICOMPOSANT AQUEUX, A BASE DE POLYURETHANNE, SON PROCEDE DE FABRICATION ET SON UTILISATION DANS DES PROCEDES DE FABRICATION D'UN VERNIS MULTICOUCHE

(84) Benannte Vertragsstaaten:
**AT BE CH DE DK ES FR GB IT LI NL SE**

(30) Priorität: **26.03.1994 DE 4410557**

(43) Veröffentlichungstag der Anmeldung:
**15.01.1997 Patentblatt 1997/03**

(73) Patentinhaber: **BASF Coatings Aktiengesellschaft**
**48165 Münster (DE)**

(72) Erfinder:
- **MEISENBURG, Uwe**
  **D-47053 Duisburg (DE)**
- **NIENHAUS, Egbert**
  **D-59387 Ascheberg (DE)**
- **MAYER, Bernd**
  **D-48165 Münster (DE)**
- **SEIDEMANN, Rolf**
  **D-48163 Münster (DE)**
- **TYE, Anthony, J.**
  **Waterville, OH 43566 (US)**

(74) Vertreter: **Münch, Volker, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 198 343**
**EP-A- 0 324 370**
**EP-A- 0 358 979**
**WO-A-95/02005**
**DE-A- 3 545 891**
**US-A- 5 276 096**

Bemerkungen:
Die Akte enthält technische Angaben, die nach dem Eingang der Anmeldung eingereicht wurden und die nicht in dieser Patentschrift enthalten sind.



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der vorliegenden Erfindung ist ein wäßriges Mehrkomponenten-Polyurethan-Beschichtungsmittel, enthaltend

A) ein wasserverdünnbares, Hydroxyl- und Carboxylat- und/oder Sulfonatgruppen aufweisendes Polyadditionsharz (A1) und/oder Polykondensationsharz (A2) mit einer OH-Zahl von 40 bis 200 mg KOH/g, vorzugsweise 60 bis 140 mg KOH/g, einer Säurezahl von 15 bis 100 mg KOH/g, vorzugsweise 25 bis 50 mg KOH/g, und einer Glasübergangstemperatur von -40°C bis +60°C, vorzugsweise -20°C bis +40°C,

B) eine Polyisocyanatkomponente (B) als Vernetzungsmittel und

C) mindestens ein Zusatzmittel.

Gegenstand der vorliegenden Erfindung ist außerdem ein Verfahren zur Herstellung dieser wäßrigen Beschichtungsmittel sowie ihre Verwendung in Verfahren zur Herstellung einer Mehrschichtlackierung sowie beschichtete Gegenstände, bei denen mindestens eine Lackschicht unter Verwendung dieser Beschichtungsmittel hergestellt wurde.

Die Lackindustrie ist aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lacken. Dies gilt sowohl für den Bereich der Automobilserienlackierung als auch für den Bereich der Autoreparaturlackierung.

Wäßrige Beschichtungsmittel kommen dabei insbesondere im Bereich der Decklacke zum Einsatz. Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht.

Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack.

Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lakkierungen, bei denen Basislacke, die Effektpigmente (z.B. Metallpigmente, insbesondere Aluminiumflakes, oder Perlglanzpigmente) enthalten, eingesetzt werden. Ferner müssen die Deckbeschichtungszusammensetzungen mit Hilfe von automatischen Lackieranlagen durch Spritzen applizierbar sein. Dazu müssen sie bei Spritzviskosität einen so hohen Feststoffgehalt aufweisen, daß mit 1 bis 2 Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand und hohe Härte) sowie eine gute Witterungsbeständigkeit zeigen.
Im Bereich der Autoreparaturlackierung besteht außerdem noch die Forderung, daß die eingesetzten Beschichtungsmittel bei niedrigen Temperaturen (im allgemeinen < 80°C) aushärtbar sind und auch bei Aushärtung bei diesen niedrigen Temperaturen zu Filmen mit den geforderten guten mechanischen Eigenschaften führen.

Aus der EP-B-358 979 sind wäßrige Zweikomponenten-Polyurethan-Beschichtungsmittel bekannt, die ein hydroxylgruppenhaltiges Polyacrylatharz sowie eine Polyisocyanatkomponente enthalten. Diese in der EP-B-358 979 beschriebenen Lacke zeigen allerdings hinsichtlich der Witterungsbeständigkeit, insbesondere hinsichtlich der Beständigkeit im Schwitzwasserkonstantklima (40°C, 240 h), und Verarbeitbarkeit (Viskositätsabfall und zu kurze Topfzeit) große Nachteile.

Ferner ist es aus der EP-B-198 343 bekannt, durch Zusatz von Carbodiimidgruppen aufweisenden Derivaten von Isocyanaten zu wäßrigen Lösungen von Carboxylgruppen aufweisenden Kunststoffen die mechanischen Eigenschaften, insbesondere die Naßfestigkeit, zu verbessern. Bei Verwendung der in der EP-B-198 343 beschriebenen Carbodiimide in wäßrigen Polyurethan-Beschichtungsmitteln treten jedoch Verträglichkeitsprobleme mit den Bindemitteln auf und die resultierenden Beschichtungen weisen eine unzureichende Bewitterungsstabilität auf.

Außerdem sind aus der EP-A-121 083 Vernetzer auf der Basis von Carbodiimiden beschrieben, die zur Vernetzung von wäßrigen, Carboxylgruppen enthaltenden Harzen eingesetzt werden. Der Zusatz der Carbodiimide zu Polyurethan-Beschichtungsmitteln ist in der EP-A-121 083 nicht beschrieben. Ferner sind die in der EP-A-121 083 beschriebenen Carbodiimide nicht polyethermodifiziert. Sie werden vielmehr unter Verwendung von Emulgatoren und von wassermischbaren Lösemitteln in wäßrige Dispersionen eingearbeitet.

Ferner sind aus der EP-A-507 407 Beschichtungsmittel bekannt, die als Vernetzungsmittel Carbodiimide enthalten, die neben Carbodiimidgruppen noch vernetzbare Gruppen enthalten. Hierdurch kann auf den Einsatz eines weiteren Vernetzungsmittels verzichtet werden. Die aus der EP-A-507 407 bekannten Beschichtungsmittel weisen aber den Nachteil auf, daß ihre Herstellung zeit- und kostenintensiver ist als die Mischung verschiedener Vernetzer mit unterschiedlichen funktionellen Gruppen. Ferner weisen diese Beschichtungsmittel den Nachteil eines hohen VOC-Wertes (Volatile Organic Content) auf, da zur Verabeitung der Beschichtungsmittel mit organischen Lösemitteln auf einen Festkörpergehalt von 50 % verdünnt werden muß. Ferner enthält die EP-A-507 407 keine Angaben über die Kurzbewitterungsstabilität der Beschichtungen.

Schließlich sind aus der EP-A-516 277 wäßrige Zweikomponenten-Polyurethanlacke bekannt, die als erfindungswesentliche Komponente ein Polyether-modifiziertes Polyisocyanat enthalten. Als Bindemittel enthalten diese wäßrigen Zweikomponentenlacke üblicherweise eingesetzte Polyacrylatharze. Die Verwendung der Polyether-modifizierten Polyisocyanate weist jedoch den Nachteil auf, daß die erhaltenen Beschichtungen nur eine geringe Witterungsbeständigkeit, vor allem schlechte Ergebnisse im Schwitzwasser-Konstantklimatest, zeigen.

Das Dokument WO-A-95/02005 beschreibt wäßrige Polyurethan-Beschichtungsmittel, die ein Polyacrylatharz, eine Polyisocyanatkomponente und ein Epoxidharz enthalten. Das Acrylatharz weist eine OH-zahl zwischen 40 und 200, eine Säurezahl zwischen 15 bis 50 und eine Glasübergangstemperatur zwischen -40°C und + 60°C auf. Das Dokument EP-A-324370 beschreibt wäßrige PolyurethanBeschichtungsmittel, die ein Polykondensationsharz, eine Polyisocyanatkomponente und ein Epoxidharz enthalten. Die Dokumente US-A-5276096 und DE-A-3545891 beschreiben mit einer Mehrschichtlackierung beschichtete Gegenstände. Mindestens eine Lackschicht wird aus Beschichtungsmitteln hergestellt, die ein Polyacrylatharz, eine Polyisocyanatkomponente und ein Polycarbodiimid (US-A-5276096) oder ein Epoxidharz (DE-A-3545891) enthalten.

Der vorliegenden Erfindung liegt somit die Aufgabe zugrunde, wäßrige Mehrkomponenten-Polyurethan-Beschichtungsmittel der eingangs genannten Art zur Verfügung zu stellen, die gegenüber den bekannten wäßrigen Polyurethan-Beschichtungsmitteln verbesserte Eigenschaften aufweisen und/oder verbesserte Lackfilme liefern. Die neuen Beschichtungsmittel sollten vor allem eine verbesserte Bewitterungsstabilität aufweisen. Außerdem sollten die Beschichtungsmittel trotz Hybridvernetzung mit mehreren unterschiedlichen Vernetzern die gleiche Applizierbarkeit besitzen wie herkömmliche 2K-PUR-Beschichtungsmittel.

Weiterhin sollten die neuen Beschichtungsmittel für den Bereich der Automobilreparaturlackierung geeignet sein, d.h. bei niedrigen Temperaturen (i. a. < 80°C) aushärtbar sein, und zu Beschichtungen führen, die die Anforderungen, die üblicherweise an einen Autoreparaturlack gestellt werden, zumindest erfüllen. Die Überzugsmittel sollten daher beispielsweise einen guten Verlauf und gute mechanische Eigenschaften aufweisen.

Diese Aufgabe wird überraschenderweise gelöst mittels eines wäßriges Mehrkomponenten-Polyurethan-Beschichtungsmittel, enthaltend: A) ein wasserverdünnbares, Hydroxylund Carboxylat- und/oder Sulfonatgruppen aufweisendes Poly- additionsharz (A1) und/oder Polykondensationsharz (A2) mit einer OH-Zahl von 40 bis 200 mg KOH/g, vorzugsweise 60 bis 140 mg KOH/g, einer Säurezahl von 15 bis 100 mg KOH/g, vorzugsweise 25 bis 50 mg KOH/g, und einer Glasübergangstemperatur von -40°C bis +60°C, vorzugsweise -20°C bis +40°C, B) eine von Carbodiimidgruppen freie Polyisocyanatkomponente (B) mit aliphatisch, cycloaliphatisch und/oder araliphatisch gebundenen freien Isocyanatgruppen als Vernetzungsmittel und C) mindestens ein Zusatzmittel, enthaltend eine Carbodiimidkomponente (C), die einen Gehalt an

Carbodiimidgruppen -N=C=N- von 2 bis 30 Gew.-%, im statistischen Mittel mindestens 0,8 Carbodi- imidgruppen pro Molekül und 0 bis 25 Gew.-%, bezogen auf Feststoff, an chemisch eingebauten, innerhalb von Polyetherketten vorliegenden Ethylenoxid- und/oder Propylenoxideinheiten aufweist, und/oder eine Polyepoxidkomponente (D), jedoch nicht einen Epoxidharzester.

Eine Ausführungsform der Erfindung besteht darin, daß die Carbodiimidkomponente (C) hergestellt worden ist durch Umsetzung mindestens eines aliphatischen und/oder . cycloaliphatischen Di- und/oder Polyisocyanates mit Ethylen- und/oder Propylenoxideinheiten aufweisenden Alkoholen, insbesondere daß die Carbodiimidkomponente (C) hergestellt worden ist unter Verwendung von Tetramethylenxylylendiisocyanat als alleiniger Isocyanatkomponente oder zumindest als eines der Di und/oder Polyisocyanate .

Die Erfindung betrifft weiterhin ein Verfahren zur Herstellung eines erfindungsgemäßen wäßrigen Mehr-komponenten-Polyurethan-Beschichtungsmittels, welches dadurch gekennzeichnet, daß kurz vor der Applikation das isocyanatgruppenhaltige Vernetzungsmittel, die Carbodiimidkomponente und/oder die Polyepoxidkomponente und das wasserverdünnbare Polyadditionsharz und/oder Polykondensationsharz gemischt werden. Eine bevorzugte Ausführungsform dieses Verfahrens ist dadurch gekennzeichnet, daß kurz vor der Applikation die Vernetzerkomponente (I), die das isocyanatgruppenhaltige Vernetzungs- mittel, die Carbodiimidkomponente und/oder die Polyepoxidkomponente enthält, und eine Bindemittelkomponente (II), die das wasserverdünnbare Polyadditionsharz und/oder Polykondensationsharz enthält, gemischt werden.

Die Erfindung lehrt auch ein Verfahren zur Herstellung eines mehrschichtigen, schützenden und/oder dekorativen Überzugs auf einer Substratfläche, bei dem (1) eine pigmentierte Basisbeschichtungszusammensetzung auf die Substratoberfläche aufgebracht wird, (2) aus der in Stufe (1) aufgebrachten Zusammensetzung ein Polymerfilm

gebildet wird, (3) auf die so erhaltene Basisschicht eine ein wasserverdünnbares Polyacrylatharz als Bindemittel und ein Polyisocyanat als Vernetzungsmittel enthaltende transparente wäßrige Deckbeschichtungszusammensetzung aufgebracht wird und anschließend (4) die Basisschicht zusammen mit der Deckschicht gehärtet wird, wobei als Deckbeschichtungszusammensetzung ein wäßriges Beschichtungsmittel nach einem der Ansprüche 8 bis 11 aufgebracht wird.

Gegenstand der vorliegenden Erfindung ist schließlich auch die Verwendung der wäßrigen Beschichtungsmittel.

Es ist überraschend und war nicht vorhersehbar, daß durch die Verwendung der erfindungsgemäß eingesetzten Carbodiimidkomponente und/oder der erfindungsgemäß eingesetzten Polyepoxidkomponente wäßrige Polyurethan-Beschichtungsmittel erhalten werden, die eine verbesserte Bewitterungsstabilität (d.h. gute Beständigkeiten im Schwitzwasser-Konstantklimatest und im Wassersprühtest) aufweisen. Vorteilhaft ist ferner, daß die erfindungsgeinäßen Beschichtungsmittel einen besseren Verlauf zeigen als herkömmliche 2K-PUR-Beschichtungsmittel und daß die erfindungsgemäßen Beschichtungsmittel die gleiche Applizierbarkeit besitzen wie herkömmliche 2K-PUR-Beschichtungsmittel.

Vorteilhaft ist schließlich auch, daß die Beschichtungsmittel zu Beschichtungen mit guten mechanischen Eigenschaften führen.

Im folgenden werden nun zunächst die einzelnen Komponenten des erfindungsgemäßen wäßrigen Beschichtungsmittels näher erläutert.

Bevor die Herstellung der erfindungsgemäß einzusetzenden Polyacrylatharze näher beschrieben wird, werden zwei Begriffserklärungen vorausgeschickt:

1. Als Abkürzung für "Methacrylsäure oder Acrylsäure" wird gelegentlich (Meth)acrylsäure verwendet.

2. Die Formulierung "im wesentlichen carboxylgruppenfrei" soll ausdrücken, daß die Komponenten (a1), (a2), (a4), (a5) und (a6) einen geringen Carboxylgruppengehalt (höchstens aber soviel, daß ein aus diesen Komponenten hergestellten Polyacrylatharz eine Säurezahl von höchstens 10 mg KOH/g hat) aufweisen können. Es ist aber bevorzugt, daß der Carboxylgruppengehalt der Komponenten (a1), (a2), (a4), (a5) und (a6) so niedrig wie möglich gehalten wird. Besonders bevorzugt werden carboxylgruppenfreie (a1), (a2), (a4), (a5) und (a6) Komponenten eingesetzt.

Als Bindemittel enthalten die erfindungsgemäßen Beschichtungsmittel ein wasserverdünnbares, Hydroxyl- und Carboxylat- und/oder Sulfonatgruppen aufweisendes Polyadditionsharz (A1) und/oder Polykondensationsharz (A2) mit einer OH-Zahl von 40 bis 200 mg KOH/g, vorzugsweise 60 bis 140 mg KOH/g, einer Säurezahl von 15 bis 100 mg KOH/g, vorzugsweise 25 bis 50 mg KOH/g, und einer Glasübergangstemperatur von -40°C bis +60°C, vorzugsweise -20°C bis +40°C.

Die als Bindemittel geeigneten Polykondensationsharze sind ansich bekannt und beispielsweise in der EP-A-542 105 beschrieben. Bevorzugt werden als (A2) Polyesterharze eingesetzt. Die Sulfonatgruppen können beispielsweise durch Verwendung von 5-(Lithiumsulfo)isophthalsäure in den Polyester eingeführt werden.

Bevorzugt werden als Bindemittel in den erfindungsgemäßen Beschichtungsmitteln Polyacrylatharze eingesetzt. Diese Polyacrylatharze werden bevorzugt hergestellt, indem in einem organischen Lösemittel oder Lösemittelgemisch und in Gegenwart mindestens eines Polymerisationsinitiators

a1) ein von (a2), (a3), (a4), (a5) und (a6) verschiedener, mit (a2), (a3), (a4), (a5) und (a6) copolymerisierbarer, im wesentlichen carboxylgruppenfreier (Meth)acrylsäureester oder ein Gemisch aus solchen Monomeren,

a2) ein mit (a1), (a2), (a3), (a4), (a5) und (a6) copolymerisierbares, von (a5) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,

a3) ein mindestens eine Carboxylgruppe und/oder Sulfonatgruppe pro Molekül tragendes, mit (a1), (a2), (a4), (a5) und (a6) copolymerisierbares, ethylenisch ungesättigtes Monomer oder ein Gemisch aus solchen Monomeren und

a4) ggf. ein oder mehrere Vinylester, von in $\alpha$-Stellung verzweigten Monocarbonsäuren mit 5 bis 18 C-Atomen je Molekül und/oder

a5) ggf.mindestens ein Umsetzungsprodukt aus Acrylsäure und/oder Methacrylsäure mit dem Glycidylester einer in $\alpha$-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweiten Monocarbonsäure mit 5 bis 18 C-Atomen je Molekül umgesetzt wird,

a6) ggf. ein mit (a1), (a2), (a3), (a4) und (a5) copolymerisierbares, von (a1), (a2), (a4) und (a5) verschiedenes, im wesentlichen carboxylgruppenfreies, ethylenisch ungesättigtes Monomer oder ein Gemisch aus solchen Monomeren

polymerisiert werden und nach Beendigung der Polymerisation das erhaltene Polyacrylatharz zumindest teilweise neutralisiert und in Wasser dispergiert wird, wobei (a1), (a2), (a3), (a4), (a5) und (a6) in Art und Menge so ausgewählt werden, daß das Polyacrylatharz (A1) die gewünschte OH-Zahl, Säurezahl und Glasübergangstemperatur aufweist.

Zur Herstellung der erfindungsgemäß eingesetzten Polyacrylatharze kann als Komponente (a1) jeder mit (a2), (a3), (a4), (a5) und (a6) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexylmethacrylat, genannt. Bevorzugt werden Gemische aus Alkylacrylaten und/oder Alkylmethacrylaten als (a1)-Komponente eingesetzt, die zu mindestens 20 Gew.-% aus n-Butylund/oder t-Butylacrylat und/oder n-Butyl- und/oder t-Butylmethacrylat bestehen.

Als Komponente (al) können auch Ethyltriglykol(meth)acrylat und Methoxioligoglykol(meth)acrylat mit einem zahlenmittleren Molekulargewicht von vorzugsweise 550 oder andere ethoxilierte und/oder propoxilierte hydroxylgruppenfreie (Meth)acrylsäurederivate eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxialkylester der Acrylsäure, Methacrylsäure oder einer anderen α,β-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxialkylester der Acrylsäure oder Methacrylsäure, in denen die Hydroxialkylgruppe bis zu 20 Kohlenstoffatome enthält, Umsetzungsprodukte aus cyclischen Estern, wie z.B. ε-Caprolacton und diesen Hydroxialkylestern, oder Mischungen aus diesen Hydroxialkylestern bzw. ε-Caprolacton-modifizierten Hydroxialkylestern eingesetzt.

Als Beispiele für derartige Hydroxialkylester werden 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat, 4-Hydroxibutylmethacrylat, Hydroxistearylacrylat und Hydroxistearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.

Ferner können als Komponente (a2) auch olefinisch ungesättigte Polyole eingesetzt werden. Bevorzugte Polyacrylatharze (A) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Sulfonyl- und/oder Carboxylgruppe pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (α3) werden vorzugsweise Acrylsäure und/oder Methacrylsäure eingesetzt. Es können aber auch andere ethylenisch ungesättigte Säuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Als Komponente (a3) können auch Maleinsäuremono(meth)acryloyloxiethylester, Bernsteinsäuremono (meth)acryloyloxiethylester und Phthalsäuremono(meth)acryloyloxiethylester eingesetzt werden. Als Beispiel für Sulfonylgruppen enthaltende Monomere seien 2-Acrylamido-2-methylpropansulfonsäure und Vinylsulfonsäure genannt.

Als Komponente (a4) werden ein oder mehrere Vinylester von in α-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus

Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.
Besonders bevorzugt werden - wegen der guten Verfügbarkeit - Vinylester von gesättigten aliphatischen Monocarbonsäuren mit 9 bis 11 C-Atomen, die am α-C-Atom verzweigt sind, eingesetzt.

Als Komponente (a5) wird das Umsetzungsprodukt aus Acrylsäure und/oder Methacrylsäure mit dem Glycidylester einer in α-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären α-Kohlenstoffatom kann vorher, während oder nach der Polymerisationsreaktion erfolgen. Bevorzugt wird als Komponente (a5) das Umsetzungsprodukt von Acryl- und der Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen carboxylgruppenfreien ethylenisch ungesättigten Monomere oder Gemische aus solchen Monomeren eingesetzt werden. Als Komponente (a6) werden vorzugsweise vinylaromatische Kohlenwasserstoffe, wie Styrol, α-Alkylstyrol und Vinyltoluol, eingesetzt.

Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht von 1.000 bis 40.000, bevorzugt von 2.000 bis 10.000, und im Mittel 0,5 bis 2,5, bevorzugt 0,5 bis 1,5, ethylenisch ungesättigte Doppelbindungen pro Molekül aufweisen. Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 beschriebenen Polysiloxanmakromonomere. Ferner sind auch andere Acryloxisilanenthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxifunktioneller Silane mit Epichlorhydrin und anschließender Umsetzung des Reaktionsproduktes mit Methacrylsäure und/oder Hydroxialkylestern der (Meth)acrylsäure.

Bevorzugt werden als Komponente (a6) Polysiloxanmakromonomere der folgenden Formel eingesetzt:

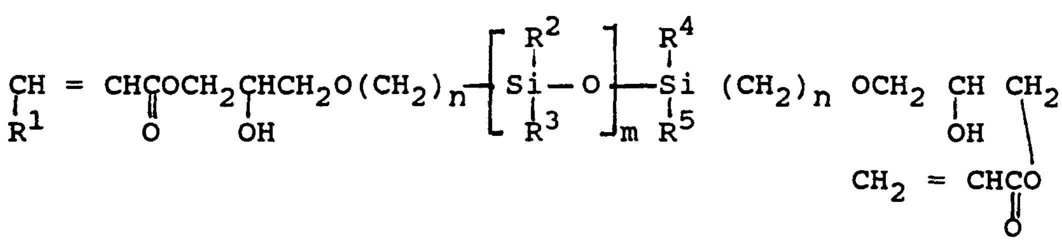

mit

$R_1$ = H oder $CH_3$
$R^2$, $R^3$, $R^4$, $R^5$ = gleiche oder verschiedene aliphatische Kohlenwasserstoffreste mit 1 bis 8 C-Atomen, insbesondere Methyl, oder Phenylrest.
n = 2 bis 5, bevorzugt 3
m = 8 bis 30

Besonders bevorzugt wird das a, -acryloxiorganofunktionelle Polydimethylsiloxan der Formel

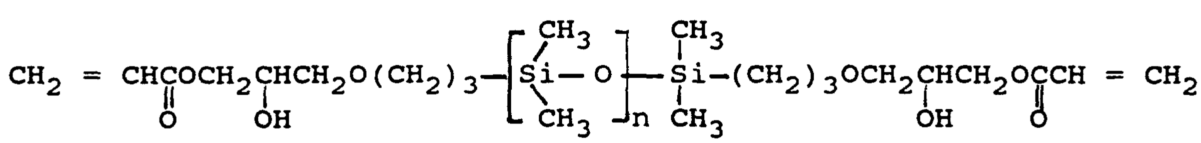

mit n ≈ 9, einem Acryloxiäquivalent von 550 g pro Äquivalent, einer OH-Zahl von 102 mg KOH/g und einer Viskosität von 240 mPas (25°C) eingesetzt. Bevorzugt werden als Komponente (a6) auch Polysiloxanmakromonomere eingesetzt, die hergestellt worden sind durch Umsetzung von 70 bis 99,999 Mol-% einer Verbindung (1), dargestellt durch die Formel (I)

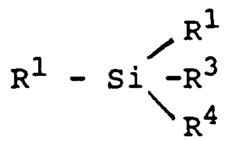

(I)

in welcher $R^1$ eine aliphatische Kohlenwasserstoffgruppe mit 1 bis 8 C-Atomen oder einen Phenylrest darstellt und $R^2$, $R^3$ und $R^4$ jeweils für einen Halogenrest oder einen Alkoxirest mit 1 bis 4 C-Atomen oder eine Hydroxylgruppe stehen, mit 30 bis 0,001 Mol-% einer Verbindung (2), dargestellt durch die Formel (II)

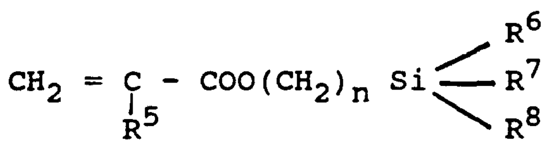

(II)

in welcher $R^5$ ein Wasserstoffatom oder einen Methylrest darstellt, $R^6$, $R^7$ und $R^8$ jeweils für Halogen, OH- oder einen Alkoxirest mit 1 bis 4 C-Atomen oder eine aliphatische Kohlenwasserstoffgruppe mit 1 bis 8 C-Atomen stehen, wobei wenigstens einer der Reste $R^6$, $R^7$ oder $R^8$ OH- oder eine Alkoxigruppe ist und n eine ganze Zahl von 1 bis 6 darstellt.

Beispiele für geeignete Verbindungen (1) und (2) sind in der WO 92/22615 auf Seite 13, Zeile 18 bis Seite 15, Zeile 9, genannt.

Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxigruppen dieser Verbindungen zurückzuführen sind. In Abhängigkeit von den Reaktionsbedingungen beinhaltet die Umsetzung zusätzlich zu den Dehydratisierungsreaktion eine dealkohalisierende Kondensation. Falls die Verbindungen (1) oder (2) Halogenreste enthalten, wird die Reaktion zwischen (1) und (2) bewerkstelligt durch Dehydrohalogenierung.

Die Bedingungen, unter denen die Reaktion zwischen der Verbindung (1) und der Verbindung (2) durchgeführt wird, sind ebenfalls in der internationalen Patentanmeldung mit der internationalen Veröffentlichungsnummer WO 92/22615 auf der Seite 15, Zeile 23, bis Seite 18, Zeile 10, beschrieben.

Die Einsatzmenge des oder der Polysiloxanmakromonomeren (a6) zur Modifizierung der Acrylatcopolymerisate (A1) beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren.

Die Verwendung derartiger Polysiloxanmakromonomerer führt zu einer Verbesserung des Slips des wäßrigen Polyurethan-Beschichtungsmittels.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von

a1) 20 bis 60 Gew.-%, bevorzugt 30 bis 50 Gew.-%, der Komponente (a1)

(a2) 10 bis 40 Gew.-%, bevorzugt 15 bis 35 Gew.-%, der Komponente (a2)

(a3) 1 bis 15 Gew.-%, bevorzugt 2 bis 8 Gew.-%, der Komponente (a3) und

(a4) 0 bis 25 Gew.-%, bevorzugt 2 bis 15 Gew.-%, der Komponente (a4)

(a5) 0 bis 25 Gew.-%, bevorzugt 2 bis 15 Gew.-%, der Komponente (a5)

(a6) 5 bis 30 Gew.-%, bevorzugt 10 bis 20 Gew.-%, der Komponente (a6),

wobei die Summe der Gewichtsanteile der Komponenten (a1) bis (a6) jeweils 100 Gew.-% beträgt.

Die Herstellung der erfindungsgemäß eingesetzten Polyacrylatharze (A1) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, 2-Methoxipropanol, n-Butanol, Methoxibutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxipropionsäureethylester und 3-Methyl-3-methoxibutanol sowie Derivate auf Basis von Propylenglykol, z.B. Ethylethoxipropionat, Methoxipropylacetat, Dipropylenglykolmonomethylether und ähnliche, genannt.
Als Beispiele für brauchbare Polymerisationsinitiatoren werden freie Radikale bildende Initiatoren, wie z.B. t-Butylperethylhexanoat, Benzoylperoxid, Azobisisobutyronitril und t-Butylperbenzoat genannt. Die Polymerisation wird zweckmäßigerweise bei einer Temperatur von 80 bis 160°C, vorzugsweise 110 bis 160°C, durchgeführt. Bevorzugt werden als Lösemittel Ethoxiethylpropionat, Dipropylenglykolmonomethylether und Butylacetat eingesetzt.
Bevorzugt wird das Polyacrylatharz (A1) nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem

I. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,

II. nachdem mindestens 60 Gew.-% des aus (a1), (a2), (a4), (a5) und ggf. (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und

III. nach Beendigung der Polymerisation das erhaltene Polyacrylatharz zumindest teilweise neutralisiert und in Wasser dispergiert wird.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie ggf. Teilen der Komponenten (a1) und (a6) vorgelegt.
Bevorzugt ist außerdem die Herstellung der erfindungsgemäß eingesetzten Polyacrylatharze (A1) durch ein Zweistufenverfahren, bei dem die Stufe (I) 1 bis 8 Stunden, vorzugsweise 1,5 bis 4 Stunden, dauert und die Zugabe der Mischung aus (a3) und dem ggf. vorhandenen Rest der Komponenten (a1), (a2), (a4), (a5) und (a6) innerhalb von 20 bis 120 Min., vorzugsweise innerhalb von 30 bis 90 Min., erfolgt. Nach Beendigung der Zugabe der Mischung aus (a3) und dem ggf. vorhandenen Rest der Komponenten (a1), (a2), (a4), (a5) und (a6) wird so lange weiter polymerisiert, bis alle eingesetzten Monomeren im wesentlichen vollständig umgesetzt worden sind.
Die Menge und Zugabegeschwindigkeit des Initiators wird. vorzugsweise so gewählt, daß ein Polyacrylatharz (A1) mit einem zahlenmittleren Molekulargewicht von 2500 bis 20.000 erhalten wird. Es ist bevorzugt, die Initiatorzugabe etwa 5 Minuten vor der Zugabe der Monomeren zu beginnen und etwa eine halbe Stunde, nachdem die Zugabe der Monomeren beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel 1 1/2 h) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.
Das erhaltene Polyacrylatharz (A1) weist eine OH-Zahl von 40 bis 200, vorzugsweise 60 bis 140 mg KOH/g, eine Säurezahl von 20 bis 100 mg KOH/g, vorzugsweise 25 bis 50 mg KOH/g und eine Glasübergangstemperatur von -40 bis +60°C, vorzugsweise -20 bis +40°C, auf. Die Glasübergangstemperatur kann dabei nach folgender Formel berechnet werden:

$$\frac{1}{Tg} = \sum_{n=1}^{n=x} \frac{Wn}{Tgn}$$

Tg = Glasübergangstemperatur des Polyacrylatharzes (A)
x = Anzahl der im Polyacrylatharz einpolymerisierten verschiedenen Monomere
Wn = Gewichtsanteil des n-ten Monomers
Tgn= Glasübergangstemperatur des Homopolymers aus dem n-ten Monomer

Für die Berechnung der Glasübergangstemperatur wird der Tg-Wert des Homopolymers des Umsetzungsproduktes aus Acrylsäure und Cardura E10 gleich der Glasübergangstemperatur des Homopolymers von Isodecylmethacrylat (-41°C) gesetzt.

Nach Beendigung der Polymerisation wird das erhaltene Polyacrylatharz teilweise neutralisiert und in Wasser dispergiert. Der jeweils einzustellende Neutralisationsgrad hängt von der Säurezahl des Acrylates ab und liegt im allgemeinen bei Säurezahlen < 70 mg KOH/g zwischen 50 und 90 % und bei Säurezahlen > 70 mg KOH/g zwischen 30 und 80 %. Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin, Diethanolamin und Triethanolamin verwendet. Besonders bevorzugt werden tertiäre Amine als Neutralisationsmittel eingesetzt, insbesondere Dimethylethanolamin, Triethylamin, Dimethylisopropylamin, Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß die Deckbeschichtungszusammensetzung einen pH-Wert von 7 bis 8,5, vorzugsweise 7,2 bis 7,8, aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittlere Teilchengröße vorzugsweise zwischen 60 und 300 nm liegt (Meßmethode: Laserlichtstreuung, Meßgerät Malvern Autosizer 2 C). Das erfindungsgemäß eingesetzte Polyacrylatharz (A1) wird in den Beschichtungsmitteln üblicherweise in einer Menge von 30 bis 50 Gew.-% (berechnet als Festkörper, d.h. ohne Wasseranteil), bezogen auf das Gesamtgewicht des Beschichtungsmittels, eingesetzt.

Bei der Polyisocyanatkomponente (B) handelt es sich um beliebige organische Polyisocyanate mit aliphatisch, cycloaliphatisch und/oder araliphatisch gebundenen, freien Isocyanatgruppen. Bevorzugt werden Polyisocyanate mit 2 bis 5 Isocyanatgruppen pro Molekül und mit Viskositäten von 200 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und ggf. die Viskosität des Polyisocyanates auf einen Wert innerhalb der obengenannten Bereiche abzusenken. Als Zusatzmittel geeignete Lösemittel für die Polyisocyanate sind beispielsweise Ethoxiethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-l-methylcyclohexan, 3-Isocyanatomethyl-3,5,5-trimethylcyclohexylisocyanat(Isophorondiisoyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4''-Triisocyanatotriphenylmethan. Es können auch Isocyanuratgruppen und/oder Biuretgruppen und/oder Allophanatgruppen und/oder Urethangruppen und/oder Harnstoffgruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat,

dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Es ist erfindungswesentlich, daß die Beschichtungsmittel eine Carbodiimidkomponente (C) und/oder eine Polyepoxidkomponente (D) enthalten. Bevorzugt enthalten die Beschichtungsmittel eine Carbodiimidkomponente (C) oder eine Mischung aus einer Carbodiimidkomponente (C) und einer Polyepoxidkomponente (D). Als Carbodiimidkomponente (C) kann jeweils ein Carbodiimid oder auch eine Mischung aus 2 oder mehreren Carbodiimiden eingesetzt werden. Ebenso kann als Polyepoxidkomponente (D) jeweils ein Polyepoxid oder eine Mischung aus 2 oder mehreren Polyepoxiden eingesetzt werden.

Die erfindungsgemäß eingesetzten Carbodiimide weisen die folgenden charakteristischen Eigenschaften auf:

1. Durch den Einbau von hydrophilen Ethylenoxid- und/oder Propylenoxideinheiten können die erfindungsgemäß eingesetzten Carbodiimide ohne weiteres wäßrigen Lösungen und insbesondere Dispersionen von Carboxylat- und/oder Carboxylgruppen und/oder Sulfonatgruppen aufweisenden Kunstharzen zugefügt werden.

2. Je nach Gehalt der erfindungsgemäß eingesetzten Carbodiimidkomponente an Carbodiimidgruppen, der durch einfache Wahl der Art und der Mengenverhältnisse der eingesetzten Ausgangsmaterialien leicht variierbar ist, kann der Vernetzungsgrad des letztendlich erhaltenen Flächengebildes eingestellt werden.

Ausgangsmaterialien für die erfindungsgemäß eingesetzten Carbodiimide sind:

a) organische Polyisocyanate einer mittleren NCO-Funktionalität von 2,0 bis 2,5 oder Gemische von organischen Poly- und Monoisocyanaten mit einer mittleren Funktionalität von 1,3 bis 2,5 und gegebenenfalls

b) im Sinne der Isocyanatadditionsreaktion mono- oder polyfunktionelle Verbindungen mit gegenüber Isocyanatgruppen reaktionsfähigen Gruppen.

Zu den Aufbaukomponnenten a) gehören:

al) beliebige aliphatische und/oder cycloaliphatische und/oder aromatische Polyisocyanate, wie insbesondere die technisch leicht zugänglichen Diisocyanate, wie Hexamethylendiisocyanat, 1-Isocyanato-3,3,5-trimethyl-5-isocyanatomethylcyclohexan und m-Tetramethylenxylylendiisocyanat (m-TMXDI).

Werden aromatische Polyisocyanate eingesetzt, so werden bevorzugt solche eingesetzt, bei denen die Isocyanatgruppen an aliphatische Reste gebunden sind. Besonders bevorzugt werden zur Herstellung der Carbodiimide Isocyanate der allgemeinen Formel (I)

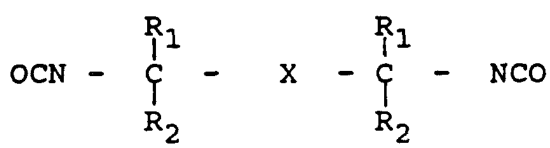

(I)

eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und $R_1$ und $R_2$ für einen Alkylrest mit 1 - 4 C-Atomen, bevorzugt für einen Methylrest, stehen. Diisocyanate der Formel (I) sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)benzol wird beispielsweise von der American Cyanamid Company unter dem Handelsnamen TMXDI (META)® verkauft).

Es ist bevorzugt, als Komponente (a1) ausschließlich ein Diisocyanat der Formel (I) oder ein Gemisch aus solchen Diisocyanaten einzusetzen. Es ist besonders bevorzugt, als Komponente (a1) ein Diisocyanat der Formel (II)

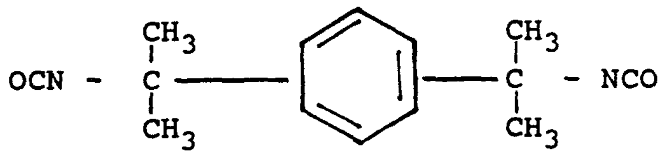 (II)

einzusetzen. Diese Isocyanaten werden auch als Tetramethylxylylendiisocyanate (TMXDI) bezeichnet. Als Komponente (a1) wird ganz besonders bevorzugt ein Diisocyanat der Formel (II) eingesetzt, bei dem die -C(CH3)$_2$NCO-Gruppen in Metastellung stehen (MTMXDI).

Weitere Ausgangsmaterialien (a) sind:

a2) Hydrophil modifizierte Polyisocyanate.

Hierzu gehören Mono- oder Diisocyanate, die innerhalb von Polyetherketten eingebaute Polyethylenoxid- und/oder Polypropylenoxideinheiten enthalten, wie sie beispielsweise in der DE-OS 23 14 512, DE-OS 23 14 513, DE-OS 25 51 094, DE-OS 26 51 506, US-PS 3,920,598 oder US-PS 3,905,929 beschrieben sind.

Besonders bevorzugte hydrophil modifizierte Polyisocyanate sind jedoch NCO-Prepolymere, wie sie durch Umsetzung von überschüssigen Mengen der unter al) beispielhaft genannten Diisocyanate mit Diolen erhalten werden. Bei der Herstellung dieser NCO-Prepolymere werden die Ausgangsmaterialien im allgemeinen unter Einhaltung eines NCO- zu OH-Äquivalentverhältnisses von 1,2 : 1 bis 10 : 1 bei 20 bis 150°C zur Reaktion gebracht. Für die Herstellung NCO-Prepolymere geeignete Diole sind insbesondere solche der allgemeinen Formel

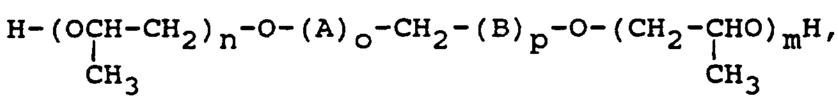

wobei A und B für gleiche oder verschiedene zweiwertige aliphatische Kohlenwasserstoffreste mit 1 bis 6 C-Atomen stehen, R für Wasserstoff, einen aliphatischen Kohlenwasserstoffrest mit 1 bis 4 C-Atomen oder einen Phenylrest steht, n und m für gleiche oder verschiedene Zahlen von 0 bis 30 stehen und o und p für jeweils 0 oder 1 stehen.

Weitere Ausgangsmaterialien (a) sind beispielsweise:

a3) Organische Monoisocyanate, wie z.B. n-Hexylisocyanat, Phenylisocyanat oder p-Toluylisocyanat. Diese Monoisocyanate werden, wie bereits oben ausgeführt, allenfalls in Abschmischung mit organischen Polyisocyanaten der beispielhaft genannten Art eingesetzt, wobei die Abschmischung eine mittlere NCO-Funktionalität von 1,3 bis 2,5, vorzugsweise 1,3 bis 2, aufweist.

Ferner können in der Komponente (a) auch andere modifizierte Polyisocyanate vorliegen, beispielsweise Umsetzungsprodukte von überschüssigen Mengen an organischen Diisocyanaten der unter (a1) beispielhaft genannten Art mit Di- oder Trihydroxialkanen eines unter 400 liegenden Molekulargewichtes, wie z.B. Ethylenglykol, Propylenglykol, Tetramethylendiole, Hexamethylendiole, Trimethylolpropan und/oder Glycerin.

Bei den gegebenenfalls mitzuverwendenen Aufbaukomponenten (b) handelt es sich beispielsweise um

b1) mehrwertige, insbesondere zweiwertige Alkohole, wie z.B. Ethylenglykol, Propylenglykol, Tetramethylendiole, Hexamethylendiole, Octamethylendiole, Neopentylglykol, 2-Methyl-1,3-dihydroxipropan, Glycerin, Trimethylolpropan, Diethylenglykol, Triethylenglykol, Tetraethylenglykol, Polyethylenglykole dergenannten Molekulargewichte, Dipropylenglykol, Tripropylenglykol oder beliebige Gemische derartiger mehrwertiger Alkohole.

Bevorzugt wird Methoxipolyethylenglykol mit einem mittleren Molekulargewicht von 550 g/mol mit 1 freien OH-Gruppe und 1 methylveretherten OH-Gruppe eingesetzt.

Weitere, gegebenenfalls mitzuverwendende Aufbaukomponenten (b) sind beispielsweise:

b2) Hydrophil modifizierte ein- oder zweiwertige Alkohole, wie beispielsweise die Ethylenoxideinheiten aufweisenden Verbindungen der allgemeinen Formel

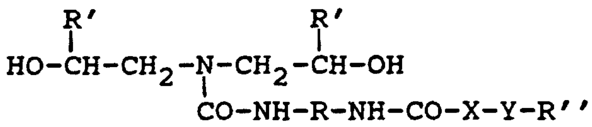

in der

- R für einen zweiwertigen Rest, wie er durch Entfernung der Isocyanatgruppen aus einem Diisocyanat der Formel R(NCO)2 der vorstehend unter (a1) genannten Art erhalten wird,
- R' für Wasserstoff oder einen einwertigen Kohlenwasserstoffrest mit 1-8 C-Atomen, vorzugsweise für Wasserstoff oder eine Methylgruppe,
- R'' für einen einwertigen Kohlenwasserstoffrest mit 1-12 C-Atomen, vorzugsweise einen unsubstituierten Alkylrest mit 1-4 C-Atomen,
- X für eine Polyalkylenoxidkette mit 5-90, vorzugsweise 20 bis 70 Kettengliedern, welche zu mindestens 40 %, vorzugsweise zu mindestens 65 %, aus Ethylenoxideinheiten bestehen und die neben Ethylenoxideinheiten auch Propylenoxid, Butylenoxid oder Styroloxideinheiten darstellen können, wobei unter den letztgenannten Einheiten Propylenoxideinheiten bevorzugt sind,
- Y für Sauerstoff oder-NR'''-, wobei R''' bezüglich seiner Definition R'' entspricht.

Die Herstellung der Verbindungen der obengenannten Formeln kann gemäß den Verfahrensweisen der DE-OS 23 14 512 bzw. DE-OS 23 14 513 erfolgen, wobei in Ergänzung der dort gemachten Offenbarung darauf hingewiesen wird, daß anstelle der dort als Ausgangsmaterial erwähnten monofunktionellen Polyetheralkohole auch solche eingesetzt werden können, deren Polyethersegment außer Ethylenoxideinheiten auch zu 60 Gew.-%, bezogen auf Polyethersegment, ein Propylenoxid-, Butylenoxid- oder Styroloxid, vorzugsweise Propylenoxid-Einheiten, aufweisen.

Der Anteil derartiger "gemischter Polyethersegmente" kann in speziellen Fällen spezifische Vorteile mit sich bringen.

Zu den erfindungsgemäß geeigneten hydrophilen einwertigen Alkoholen gehören beispielsweise Verbindungen der Formel H-X-Y-R'', in welcher X, Y und R'' die soeben genannte Bedeutung haben.

Diese einwertigen, hydrophil modifizierten Alkohole können nach den in der US-PS-3,905,929 oder der US-PS-3,920,538 beschriebenen Verfahren hergestellt werden, beispielsweise durch Alkoxilierung von geeigneten Startermolekülen, wie z.B. n-Butanol mit Ethylenoxid und gegebenenfalls weiteren Alkylenoxiden, wie z.B. Propylenoxid.

Die aus den beispielhaft genannten Ausgangsmaterialien hergestellten, erfindungsgemäß eingesetzten Carbodiimidgruppen aufweisenden Isocyanatderivate weisen einen Gehalt von 2 bis 30, vorzugsweise 5 bis 15 Gew.%, an Carbodiimidgruppen -N = C = N-, im statistischen Mittel pro Molekül 0,8 bis 30, vorzugsweise 1 bis 25 und besonders bevorzugt 1,3 bis 20 derartige Carbodiimidgruppen auf. Ihr Gehalt an eingebauten, innerhalb von Polyetherketten vorliegenden Ethylenoxideinheiten liegt bei 0 bis 25, vorzugsweise 2 bis 20 und besonders bevorzugt 5 bis 15 Gew. %, bezogen auf Feststoff. Vorzugsweise liegen die genannten hydrophilen Gruppierungen in den Carbodiimiden in solchen Mengen vor, daß ihre Löslichkeit oder Dispergierbarkeit in Wasser gewährleistet ist. Es ist jedoch auch möglich, jedoch keinesfalls bevorzugt, zusätzlich zu den genannten chemisch eingebauten hydrophilen Gruppierungen externe Emulgatoren mitzuverwenden, die mit den Carbodiimiden abgemischt werden, um ihre Löslichkeit bzw. Dispergierbarkeit in Wasser zu gewährleisten.

Derartige Emulgatoren sind beispielsweise ethoxiliertes Nonylphenol, Polyoxiethylen, Laurylether oder Polyoxiethylenlaurat, -oleat oder -stearat, wobei diese Verbindungen im allgemeinen von 8 bis 50 Oxiethyleneinheiten pro Molekül aufweisen.

Der Gehalt der Carbodiimide an den genannten, erfindungswesentlichen Gruppierungen wird durch entsprechende Wahl der Art und der Mengenverhältnisse der Ausgangsinaterialien bzw. des Carbodiimidisierungsgrades sichergestellt. Unter Carbodiimidisierungsgrad ist hierbei der Prozentsatz der in den Ausgangsisocyanaten (a) vorliegenden Isocyanatgruppen zu verstehen, die unter Carbodiimidisierung zur Umsetzung gebracht werden. Vorzugsweise weisen die erfindungsgemäßen eingesetzten Verbindungen nach ihrer Herstellung keine freien Isocyanatgruppen mehr auf.

Die Herstellung der erfindungsgemäß eingesetzten Verbindungen kann nach verschiedenen Varianten erfolgen.

Die einfachste Art der Herstellung besteht darin, Gemische aus organischen Polyisocyanten, vorzugsweise Diisocyanaten, unter vollständiger Carbodiimidisierung der Isocyanatgruppen umzusetzen, wobei Ethylenoxideinheiten aufweisende Alkohole bzw. Polyetheralkohole in einer solchen Menge mitverwendet werden, daß das resultierende Produkt einen Ethylenoxidgruppengehalt innerhalb der obengenannten Grenzen aufweist, und wobei das Mengenverhältnis von Polyisocyanat zu Monoisocyanat, d.h. die mittlere Funktionalität des Isocyanatgemisches, so gewählt wird, daß während der Carbodiimidisierungsreaktion ein Kettenabbruch stattfindet, so daß die resultierenden Produkte einen Carbodiimidgruppengehalt innerhalb der obengenannten Bereiche aufweisen.

Ein derartiger Kettenabbruch tritt stets dann ein, wenn die mittlere NCO-Funktionalität unter 2,0 liegt. Durch einfache Wahl der mittleren NCO-Funktionalität der als Komponente (a) eingesetzten Isocyanate kann somit das Molekulargewicht und damit die Anzahl der im statistischen Mittel in den Verfahrensprodukten vorliegenden Carbodiimidgruppen eingestellt werden.

Gemäß einer weiteren Variante werden die Isocyanatgruppen der Ausgangskomponente (a) nur zum Teil carbodiimidisiert und die dann noch vorliegenden freien Isocyanatgruppen mit gegenüber Isocyanatgruppen reaktionsfähigen Gruppen der oben unter (b) beispielhaft genannten Art zur Umsetzung gebracht, wobei der Carbodiimidisierungsgrad der ersten Reaktionsstufe so zu wählen ist, daß im letztendlich erhaltenen Verfahrensprodukt eine den oben gemachten Angaben entsprechende Menge an Carbodiimidgruppen vorliegt. Hierbei wird die Menge der Komponente (b) stets so bemessen, daß für jede Isocyanatgruppe des ancarbodiimidisierten Isocyanats mindestens 1 gegenüber Isocyanatgruppen reaktionsfähige Gruppe zur Verfügung steht.

Die Anzahl der im statistischen Mittel in den Verfahrensprodukten vorliegenden Carbodiimidgruppen kann auch hier durch geeignete Wahl der Funktionalität der Ausgangskomponenten, d.h. durch eine hierdurch mögliche Einstellung des Molekulargewichts vorbestimmt werden. Falls beispielsweise die Anzahl der Carbodiimidgruppen im ancarbodiimidisierten Isocyanat bereits erreicht ist, wird man bei der Umsetzung mit der Komponente (b) auf eine kettenverlängernde Reaktion verzichten, d.h. man wird vorzugsweise als Komponente (b) ausschließlich kettenabbrechende Aufbaukomponenten der beispielhaft genannten Art verwenden. Umgekehrt kann bei zumindest anteiliger Verwendung von difunktionellen Aufbaukomponenten (b) eine Kettenverlängerungsreaktion herbeigeführt werden, wodurch sich selbstverständlich im statistischen Mittel die Anzahl der pro Molekül in den Verfahrensprodukten vorliegenden Carbodiimidgruppen erhöht.

Bei dieser Varianate des Verfahrens weist die Komponente (a) vor der Carbodiimidisierungsreaktion vorzugsweise eine NCO-Funktionalität von 1,8 bis 2,5 auf. Nach dieser Verfahrensweise lassen sich auch wertvolle Verfahrensprodukte herstellen, die im statistischen Mittel den obengemachten Angaben bezüglich der Anzahl der Carbodiimideinheiten entsprechend, eine Vielzahl von Carbodiimideinheiten aufweisen.

Die gegegbenenfalls in den Verfahrensprodukten vorliegenden Ethylenoxideinheiten werden auch bei der zweiten Variante des Herstellungsverfahrens durch Mitverwendung von Ethylenoxideinheiten aufweisenden Komponenten (a) und/oder durch Mitverwendung von Ethylenoxideinheiten aufweisenden Komponenten (b) der oben beispielhaft genannten Art in das Verfahrensprodukt eingebaut.

Bei beiden Varianten des Verfahrens erfolgt die zumindest teilweise Carbodiimidisierung der Isocyanatgruppen der Komponente (a) in an sich bekannter Weise, beispielsweise in Analogie zu der vorbekannten Lehre des Standes der Technik, wie dies beispielsweise aus den US-Patentschriften 2,840,589, 2,941,966 oder den deutschen Offenlegungsschriften 25 04 400, 25 52 350 oder 26 53 120 hervorgeht. Besonders vorteilhaft erfolgt die zumindest teilweise Carbodiimidisierung der Isocyanatgruppen der Komponente (a) unter Verwendung von Carbodiimidisierungskatalysatoren, wie sie zum Beispiel in den US-Patentschriften 2,941,966, 2,853,581 oder 2,853,473 oder in der DE-OS 26 14 323 beschrieben sind. Besonders bevorzugt erfolgt die Carbodiimidisierung unter Verwendung von 1-Methyl-1-phospha-2-cyclopenten-1-oxid oder 1-Methyl-1-phospha-3-cyclopenten-1-oxid oder Mischungen dieser Verbindungen als Katalysatoren.

Selbstverständlich können auch beliebige andere Carbodiimidisierungskatalysatoren eingesetzt werden. Die zumindest teilweise Carbodiimidisierung der Komponente (a) erfolgt im allgemeinen unter Verwendung von 0,01 bis 5, vorzugsweise 0,2 bis 2 Gew.%, bezogen auf Komponente (a), an Carbobiimidisierungskatalysatoren der genannten Art innerhalb des Temperaturbereiches von 0 bis 200°C, vorzugsweise 20-150°C. Falls nur eine teilweise Carbodiimidisierung der Isocyanatgruppen der Komponente (a) angestrebt wird, empfiehlt es sich, die Carbodiimidisierungsreaktion beim jeweils gewünschten Carbodiimidisierungsgrad durch Zugabe eines Katalysatorgifts abzubrechen. Geeignete Katalysatorengifte sind beispielsweise in der DE-OS-26 14 323 beschrieben.

Um bei Raumtemperatur lagerstabile, teilcarbodiimidisierte Isocyanate zu erhalten, kann es auch empfehlenswert sein, die Carbodiimidisierungsreaktion bei 50-200°C durchzuführen und zwar unter Verwendung von Katalysatoren, die nur in diesem erhöhten Temperaturbereich ihre katalytische Wirksamkeit enthalten. Dieses ist beispielsweise in der EP-B-198 343 beschrieben.

Der Fortschritt der Carbodiimidisierungsreaktion kann an der Kohlendioxidentwicklung und am Abfall des NCO-Gehaltes des Reaktionsgemisches verfolgt werden. In der Regel entstehen bei der teilweisen Carbodiimidisierung keine einheitlichen Verfahrensprodukte, sondern Mischungen von Carbodiimiden mit unterschiedlichen Gehalten an Carbodiimidheiten pro Molekül sowie gegebenenfalls mit noch unreagiertem Ausgangsisocyanat.

Alle oben gemachten Angaben bezüglich des Gehalts der Verfahrensprodukte an Carbodiimidgruppen und bezüglich der Anzahl an Carbodiimidgruppen pro Molekül beziehen sich daher auf statistische Mittelwerte.

Die Carbodiimidisierungsreaktion kann in Gegenwart oder auch in Abwesenheit von Lösemitteln durchgeführt

werden. Beispiele geeigneter Lösemittel sind Toluol, Xylol, Cyclohexan, Chlorbenzol, O-Dichlorbenzol, Dimethylformamid, Perchlorethylen, Ethylacetat, Butylacetat, Diethylenglykoldimethylether, Tetrahydrofuran, Aceton, Methylethylketon, Cyclohexanon oder beliebige Gemische derartiger Lösemittel.
Das lösemittelfreie hergestellte Carbodiimidisierungsprodukt verfestigt sich zu einem harten Harz, das zu einem Pulver zerrieben und später erfindungsgemäß verwendet bzw. durch Umsetzung mit der Komponente (b) weiter verarbeitet werden kann.

Die im Anschluß an die Carbodiimidisierungsreaktion gegebenenfalls noch durchzuführende Umsetzung mit der Komponente (b) erfolgt ebenfalls in Gegenwart oder in Abwesenheit von Lösemitteln der beispielhaft genannten Art innerhalb eines Temperaturbereichs von 0 bis 150°, vorzugsweise 20 bis 100°C.

Hierbei können bei Verwendung von unterschiedlichen Komponenten (b) die Reakationskomponenten sowohl gleichzeitig als auch nacheinander zur Reaktion gebracht werden, wobei das Verhältnis der Isocyanatgruppen der carbodiimidisierten Komponente (a) zu den gegenüber Isocyanatgruppen reaktionsfähigen Gruppen der Komponente (b) bei 1:1 bis 1:1,5, vorzugsweise 1:1 bis 1:2 liegt.

Besonders bevorzugt ist eine Verfahrensweise, die darin besteht, die Carbodiimidisierungsreaktion bis zu einem solchen Carbodiimidisierungsgrad zu führen, daß im letztendlich erhaltenen Verfahrensprodukt die erforderliche Menge an Carbodiimidgruppen vorhanden ist. Das so erhaltene Produkt wird mit gegebenenfalls difunktionellen, Ethylenoxideinheiten aufweisenden Verbindungen (b) unter Einhaltung eines Äquivalentverhältnisses von NCO-Gruppen zu gegenüber NCO-Gruppen reaktionsfähigen Gruppen von 1,05 : 1 bis 10 : 1 zur Reaktion gebracht und anschließend die dann noch vorliegenden, freien NCO-Gruppen mit Kettenabbrechern der unter (b) beispielhaft genannten Art unter Einhaltung eines Äquivalentverhältnisses von NCO-Gruppen zu gegenüber NCO-reaktionsfähigen Gruppen von 1:1 bis 1:1,5, vorzugsweise 1:1, oder mit einem hohen Überschuß an Kettenverlängerungsmitteln der unter (b) beschriebenen Art, vorzugsweise unter Einhaltung eines Äquivalentverhältnisses von NCO-Gruppen zu gegenüber NCO-Gruppen reaktionsfähigen Gruppen von mindestens 1:2 umgesetzt, so daß ein NCO-freies Produkt entsteht.

Weitgehend äquivalent zu dieser besonders bevorzugten Arbeitsweise wäre eine Arbeitsweise, die darin besteht, die teilcarbodiimidisierten Diisocyanate mit einem Gemisch aus difunktionellen hydrophilen Aufbaukomponenten mit Kettenabbrechern unter Einhaltung eines Äquivalentverhältnisses von NCO-Gruppen zu gegenüber NCO-Gruppen reaktionsfähigen Gruppen von 1:1 bis 1:1,5 zur Reaktion zu bringen.

Nach der Umsetzung kann das gegebenenfalls mitverwendete Lösemittel beispielsweise durch Destillation entfernt werden. Bei dem lösemittelfreien Reaktionsprodukt handelt es sich im allgemeinen um einen Feststoff, der jederzeit in einem organischen Lösemittel aufgenommen oder auch ohne Verwendung von Lösemitteln erfindungsgemäß verwendet werden kann. Hierzu können die Carbodiimide den Beschichtungsmitteln in Form von wäßrigen Lösungen oder Dispersionen oder auch in Substanz zugesetzt werden.
Ggf. nach Einführung von Ethylenoxid- und/oder Propylenoxideinheiten können in den Beschichtungsmitteln auch beispielsweise die in der DE-A-41 26 359, insbesondere auf Seite 2, Zeile 1, bis Seite 3, Zeile 45, beschriebenen Carbodiimide eingesetzt werden.

Die erfindungsgemäß eingesetzten Carbodiimide eignen sich insbesondere zur Modifizierung von Carboxylatund/oder Carboxylgruppen und/oder Sulfonatgruppen aufweisenden, in Wasser gelöstem oder dispergiert vorliegendem Polyurethan sowie zur Modifizierung von in Wasser gelöst oder dispergiert vorliegenden, Carboxylatgruppen und/oder Carboxylgruppen und/oder Sulfonatgruppen aufweisenden Polyesterharzen, Polybutadienen oder Polyacrylatharzen.
Die Menge der erfindungsgemäß eingesetzten Carbodiimide richtet sich einerseits nach dem Gehalt des gelösten bzw. dispergierten Polymeren an Carboxylatgruppen und/oder Carboxylgruppen und andererseits nach dem angestrebten Eigenschaftsbild der Beschichtungen. So kann es einerseits erwünscht sein, das Verhältnis von Carboxylatgruppen und/oder Carboxylgruppen und/oder Sulfonatgruppen des gelösten oder dispergierten Bindemittels zu den Carbodiimidgruppen größer als 1:1 zu wählen, um insbesondere im Fall der Verwendung von Carbodiimiden mit mehr als 2 Carbodiimidgruppen pro Molekül eine zu starke Vernetzung des Produktes zu vermeiden, andererseits kann durch die Verwendung von mindestens äquivalenten Mengen an Carbodiimidgruppen, insbesondere bei (im statistischen Mittel) mindestens difunktionellen Carbodiimiden, die Reaktionszeit während der Trocknung der letztendlich erhaltenen Beschichtungen verkürzt werden.

Die erfindungsgemäßen Beschichtungsmittel können außerdem als Zusatzmittel zusammen oder anstelle der Carbodiimide noch eine Polyepoxidkomponente (D) enthalten. Beispiele für geeignete Polyepoxide sind alle bekannten aliphatischen und/oder cycloaliphatischen und/oder aromatischen Polyepoxide, beispielsweise auf Basis Bisphenol-A oder Bisphenol-F.

Als Komponente (D) sind beispielsweise auch die im Handel unter den Bezeichnungen Epikote® der Firma Shell, Denacol der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerol-polyglycidylether), geeignet.

Die Polyepoxidkomponente (D) wird in den erfindungsgemäßen Beschichtungsmitteln vorteilhafterweise in

solch einer Menge eingesetzt, daß das Gewichtsverhältnis von Bindemittelfeststoff zu Polyepoxidfeststoff zwischen 60 : 40 und 90 : 10, bevorzugt zwischen 70 : 30 und 85 : 15, liegt.

Zur Herstellung der gebrauchsfertigen, wäßrigen Polyurethan-Beschichtungsmittel wird eine Mischung aus der Polyisocyanatkomponente (B) und der Carbodiimidkomponente (C) und/oder der Polyepoxidkomponente (D) kurz vor der Applikation mit der Bindemittelkomponente (A) vermischt. Die Durchmischung kann durch einfaches Verrühren bei Raumtemperatur, aber auch durch Dispergieren erfolgen. Die Polyisocyanatkomponente (B) wird dabei in solch einer Menge eingesetzt, daß das Gewichtsverhältnis zwischen Bindemittelfeststoff und Polyisocyanatfeststoff 60:40 bis 90:10, besonders bevorzugt 70:30 bis 85:15, beträgt. Das Verhältnis der Anzahl der freien OH-Gruppen der Komponente (A) zur Anzahl der Isocyanatgruppen der Komponente (B) liegt dabei üblicherweise im Bereich von 1:2 bis 2:1.

Es ist bevorzugt, daß die Carbodiimidkomponente in solch einer Menge eingesetzt wird, daß das Gewichtsverhältnis zwischen Bindemittelfeststoff (A) und Carbodiimidfeststoff (C) zwischen 60 : 40 und 90 : 10, bevorzugt zwischen 70 : 30 und 85 : 15 liegt. Das Verhältnis der Anzahl der Säuregruppen des Bindemittels (A) zu den Carbodiimidgruppen der Komponente (C) liegt dabei üblicherweise im Bereich zwischen 1 : 2 und 2 : 1.

Die erfindungsgemäßen wäßrigen PolyurethanharzBeschichtungsmittel können neben dem erfindungsgemäß eingesetzten Polyadditions- und/oder Polykondensationsharz auch noch vernetzte Polymermikroteilchen, wie sie zum Beispiel in der EP-A-38 127 offenbart sind, und/oder weitere verträgliche Harze, wie z.B. wasserverdünnbare oder wasserlösliche Polyacrylatharze, Polyurethanharze, Polyesterharze, Alkydharze oder Epoxidharzester enthalten. Der Anteil dieser weiteren Harze liegt üblicherweise zwischen 1 und 10 Gew.-%, bezogen auf das Gesamtgewicht des Beschichtungsmittels. So können den erfindungsgemäßen Beschichtungsmitteln beispielsweise bis zu 30 Gew.-%, bezogen auf den Bindemittelfestkörper, eines mittels Emulsionspolymerisation hergestellten Acrylates mit einer OH-Zahl, die bevorzugt zwischen 40 und 200 mg KOH/g liegt, zugesetzt werden. Die Herstellung deartiger Emulsionspolymere ist beispielsweise in der DE-OS 40 09 000 beschrieben, wobei allerdings die OH-Zahl der Acrylate entsprechend zu erhöhen ist.

Darüber hinaus können die erfindungsgemäßen Beschichtungsmittel auch noch übliche Hilfs- und Zusatzstoffe, wie insbesondere Verdicker und Netzmittel, enthalten.

Bevorzugt wird in den erfindungsgemäßen wäßrigen Beschichtungsmitteln ein nichtionisches Polyurethanverdickungsmittel zugesetzt, da dies zu einer besseren Transparenz und besseren Emulgierbarkeit des Polyisocyanates führt. Bevorzugt wird in den erfindungsgemäßen wäßrigen Beschichtungsmitteln außerdem ein Netzmittel auf Basis eines alkylmodifizierten Polyethers zugesetzt, da dies ebenfalls die Transparenz des Beschichtungsmittels sowie Glanz und Verlauf des Beschichtungsmittels verbessert.

Darüber hinaus können die wäßrigen Beschichtungsmittel noch weitere übliche Hilfs- und Zusatzstoffe, wie beispielsweise Entschäumungsmittel und ähnliches, enthalten. Die Einsatzmenge Hilfs- und Zusatzstoffe (einschl. Netzmittel und Verdickungsmittel) beträgt üblicherweise zwischen 1 und 5 Gew.-%, bezogen auf das Gesamtgewicht der Beschichtungsmittel.

Die erfindungsgemäßen wäßrigen Beschichtungsmittel können auch übliche organische Lösemittel enthalten. Deren Anteil wird möglichst gering gehalten. Er liegt üblicherweise unter 15 Gew.-%, bezogen auf den Gesamtgehalt an flüchtigen Bestandteilen.

Die erfindungsgemäßen Beschichtungsmittel werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin, eingestellt werden.

Die erfindungsgemäßen Beschichtungsmittel können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden. Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden vorzugsweise aber im Bereich der Reparaturlackierung eingesetzt. Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base coat- /Clear coat-Verfahren). Bevorzugt werden die erfindungsgemäßen Beschichtungsmittel aber als Klarlacke eingesetzt.

Wenn die erfindungsgemäßen Beschichtungsmittel zur Herstellung von einschichtigen Decklackierungen oder als Basislacke eingesetzt werden, dann können sie mit Pigmenten, wie z.B. Pigmenten auf anorganischer Basis, z.B. Titandioxid, Eisenoxid, Ruß usw. und/oder Pigmenten auf organischer Basis und/oder Metallpigmenten, wie z.B. Aluminiumbronzen und/oder Perlglanz- bzw. Interferenzpigmenten, pigmentiert werden. Aluminiumbronzen und Perlglanz- bzw. Interferenzpigmente sind Beispiele für Effektpigmente. Wenn die erfindungsgemäßen Beschichtungsmittel als pigmentierte Basislacke eingesetzt werden, dann können sie mit den erfindungsgemäßen Beschichtungsmitteln, die keine Pigmente enthalten oder nur transparent pigmentiert sind, überlackiert werden, sie können aber auch mit konventionellen Klarlacken auf Basis organischer Lösemittel, mit wäßrigen Klarlacken oder auch Pulverklarlacken überlackiert werden.

Die erfindungsgemäßen Deckbeschichtungszusammensetzungen

- weisen bei Spritzviskosität einen so hohen Feststoffgehalt (20 bis 50 Gew.-%, vorzugsweise 32 bis 45 Gew.-%) auf, daß mit 1 bis 2 Spritzgängen (Kreuzgänge) Lackfilme mit ausreichender Schichtdicke (die Dicke des eingebrannten Lackfilms sollte vorzugsweise zwischen 25 und 70 µm liegen) erhalten werden und

- liefern Lackfilme mit einem sehr guten Aussehen (guter Verlauf, hoher Glanz, guter Decklackstand), guter Witterungsbeständigkeit und guten mechanischen Eigenschaften und

- weisen einen verhältnismäßig niedrigen Anteil an organischen Cosolventien (weniger als 35 Gew.-%, bezogen auf den Gesamtfeststoffgehalt an Bindemitteln und Vernetzungsmitteln) auf.

Wenn die erfindungsgemäßen Deckbeschichtungszusammensetzungen zusammen mit wasserverdünnbaren Basisbeschichtungszusammensetzungen zur Herstellung von Metalleffektlackierungen verwendet werden, dann werden Metalleffektlackierungen erhalten, in denen die transparente Deckschicht besonders gut auf der Basisschicht haftet. Geeignete Basislacke sind beispielsweise die in der DE-OS 40 09 000 beschriebenen wäßrigen Basislacke. Geeignet sind ferner alle üblicherweise eingesetzten wäßrigen Basislacke.
In den folgenden Beispielen wird die Erfindung näher erläutert. Alle Angaben über Teile und Prozente sind Gewichtsangaben, sofern nicht ausdrücklich etwas anderes angegeben wird.

**Beispiele 1 bis 4 sowie Vergleichsbeispiele 1 und 2**

**1. Herstellung eines erfindungsgemäß eingesetzen wasserverdünnbaren Acrylatharzes (A1)**

In einem Stahlkessel, ausgestattet mit Monomerzulauf, Initiatorzulauf, Thermometer, Ölheizung und Rückflußkühler werden 24 Gew.-Teile Ethoxiethylpropionat (EP) vorgelegt und auf 120 °C aufgeheizt. Dann wird eine Lösung von 6,0 Gew.-Teilen t-Butylperethylhexanoat in 6,0 Gew.-Teilen Ethoxiethylpropionat in einer solchen Geschwindigkeit zugegeben, daß die Zugabe nach 4 h 30 min abgeschlossen ist. Mit Beginn der Zugabe der t-Butylperethylhexanoatlösung wird auch mit der Zugabe der Monomermischung aus (a1), (a2), (a3) und (a4)

**(a1):** 20,0 Gew.-Teilen n-Butylmethacrylat 17,4 Gew.-Teile Methylmethacrylat, 10,0 Gew.-Teile Laurylacrylat (Handelsprodukt Methacrylester 13 der Firma Rhöm AG, Darmstadt)

**(a6):** 15,0 Gew.-Teile Styrol

**(a2):** 32,5 Gew.-Teile Hydroxiethylmethacrylat

**(a3):** 5,1 Gew.-Teile Acrylsäure

begonnen.
Die Mischung (a1), (a2), (a3) und (a6) wird in einer solchen Geschwindigkeit zugegeben, daß die Zugabe nach 4 Stunden abgeschlossen ist. Nach Abschluß der Zugabe der t-Butylperethylhexanoatlösung wird die Reaktionsmischung noch 2 h bei 120 °C gehalten. Dann wird die Harzlösung auf 80 °C abgekühlt und innerhalb von etwa 30 min mit Dimethylethanolamin bis zu einem Neutralisationsgrad von 60 % neutralisiert.
Anschließend wird soviel Wasser zugegeben, bis der Feststoffgehalt der Dispersion etwa 40 Gew.-% beträgt. Aus dieser Dispersion wird so lange organisches Lösemittel durch azeotrope Destillation unter Vacuum entfernt, bis höchstens 3 % (laut GC) nachweisbar ist. Während das organische Lösemittel abgetrennt wurde, wird das Wasser in den Reaktor zurückgeführt.
Nach Beendigung der Destillation wird die Dispersion durch Zugabe von deionisiertem Wasser auf folgende Endkennzahlen eingestellt:
Säurezahl des Gesamtfestkörpers: 40 mg KOH/g Feststoff; OH-Zahl des Gesamtfestkörpers: 140 mg KOH/g Feststoff; Feststoffgehalt (1 h, 130 °C): 39,0 %.

**2.1 Herstellung eines erfindungsgemäß eingesetzten Carbodiimids 1 (C1)**

475 Teile (1,3-Bis(2-Isocyanatoprop-2-yl)benzol (Handelsprodukt TMXDI (Meta)® der Firma American Cynamid Comp.) und 119 g Isophorondiisocyanat werden mit 14 Teilen 3-Methyl-1-phenyl-2-phospholen-1-oxid in einen Reaktor gegeben. Unter Stickstoffatmosphäre wird auf 155 °C erhitzt, bis der Isocyanatgehalt 6,5 % erreicht hat (ungefähr nach 19 h). Die Reaktionsmischung wird dann auf 50 °C abgekühlt, bevor 143 Teile Methoxipolyethylenglycol mit einem Molekulargewicht von 550 und 0,6 Teile Dibutylzinndilaurat zugegeben werden. Die Mischung wird bei 50 °C solange gerührt, bis ein konstanter Isocyanatgehalt von ca. 4,2 % erreicht wurde. Bei 50 °C werden dann 142 Teile Ethanol zugegeben und solange gerührt, bis kein freies NCO bestimmt wird.

Das restliche Ethanol wird unter Vacuum abdestilliert und mit Metoxypropylacetat auf 79 % Festkörper eingestellt.

**2.2 Herstellung des erfindungsgemäß eingesetzten Carbodiimids 2**

50 Teile eines Tetraisopropyldiphenylmethancarbodiimids (hergestellt gemäß DE-A 41 26 359), bei dem die verbliebenen NCO-Gruppen mit Ethanol teilweise urethanisiert wurden (8 % freie NCO-Gruppen) wurden mit 25 Teilen eines handelsüblichen Polyetheralkohols vom Propylenglykoltyp mit einem mittleren Molekulargewicht von 900 (Handelsprodukt Pluriol® P 900 der BASF AG) und 0,1 Teilen Dibutylzinndilaurat (DBTL) 6 Stunden bei 80°C umgesetzt. Der Festkörper wurde mit Methoxypropylacetat auf 60 % eingestellt und das Produkt abgelassen.

**3.) Herstellung erfindungsgemäßer transparenter wäßriger Deckbeschichtungszusammensetzungen**

Aus der gemäß Punkt A hergestellten Acrylatdispersion, einer 80 %igen Lösung eines handelsüblichen wasserverdünnbaren Polyisocyanatharzes in Ethylethoxipropionat auf Basis Hexamethylendiisocyanat Dimerisat/Trimerisat, uretdiongruppenhaltig (Handelsprodukt Desmodur® N 3400 der Firma Bayer AG), ggf. dem Carbodiimid 1 bzw. 2, ggf. einem handelsüblichen aromatischen Polyepoxid mit einem Epoxidäquivalentgewicht von 231 (Handelsprodukt Denacol EX-411 der Firma Nagase Chemical Ltd., Japan) Butylglykol, Methylisobutylketon, Ethoxiethylpropionat, einer 10%-igen, wäßrigen Lösung eines handelsüblichen Polyurethanverdickungsmittel (Dapral T 210 der Firma Akzo), destilliertem Wasser, einem handelsüblichen siloxanmodifizierten Oberflächenadditiv (Handelsprodukt Tego Flow 425 der Firma Goldschmidt, Essen) und einem oberflächenaktiven Mittel auf Silikonbasis (Handelsprodukt Byk 331 der Firma Byk) werden transparente Deckbeschichtungszusammensetzungen hergestellt und mit destilliertem Wasser auf Spritzviskosität (22 bis 25 s Auslaufzeit aus dem DIN-4-Becher (nach DIN 53 211, 1974)) eingestellt. Die Zusammensetzung der Deckbeschichtungszusammensetzungen ist in Tabelle 1 dargestellt.

4.) **Applikation der erfindungsgemäßen transparenten Deckbeschichtungszusammensetzungen und Prüfung der eingebrannten Lackfilme**

Auf ein mit einer handelsüblichen Elektrotauchlackierung und einem handelsüblichen Füller beschichtetes phosphatiertes Stahlblech wird eine wasserverdünnbare, mit Aluminiumplättchen pigmentierte Basisbeschichtungszusammensetzung gemäß EP-A-279 813 so appliziert, daß eine Trockenfilmschichtdicke von 12 bis 15 µm erhalten wird. Die applizierte Basisbeschichtungszusammensetzung wird 10 Min. bei Raumtemperatur und 10 Min. bei 60°C getrocknet. Dann wird eine gemäß Punkt B) erhaltene Deckbeschichtungszusammensetzung in 3 Spritzgängen mit 15 Min. Zwischenablüftzeit auf die Basisschicht gespritzt. Schließlich wird 60 Min. bei Raumtemperatur getrocknet und 30 Min. bei 60°C im Umluftofen eingebrannt. Die so erhaltenen mehrschichtigen Überzüge wurden mehreren Prüfungen unterzogen. Die Prüfergebnisse sind in Tabelle 2 dargestellt.

Tabelle 1: Zusammensetzung der transparenten, wäßrigen Deckbeschichtungszusammensetzungen der Beispiele 1 bis 3 und der Vergleichsbeispiele 1 und 2

| | Beispiel 1 | Beispiel 2 | Beispiel 3 | Beispiel 4 | Vergleichsbeispiel 1 | Vergleichsbeispiel 2 |
|---|---|---|---|---|---|---|
| Acrylatdisp. | 56,6 | 56,1 | 56,1 | 56,1 | 58,0 | 60,0 |
| dest. Wasser | 5,7 | 5,6 | 5,6 | 5,6 | 5,9 | 6,0 |
| Dapral T210 (10%ig) | 1,4 | 1,4 | 1,4 | 1,4 | 1,4 | 1,4 |
| Butylglykol | 1,1 | 1,1 | 1,1 | 1,1 | 1,1 | 1,1 |
| Methylisobutylketon | 1,1 | 1,1 | 1,1 | 1,1 | 1,1 | 1,1 |
| Ethoxiethylpropionat | 2,3 | 2,3 | 2,3 | 2,3 | 2,3 | 2,3 |
| Byk 331 | 0,1 | 0,1 | 0,1 | 0,1 | 0,1 | 0,1 |
| Tego Flow 425 | 0,1 | 0,1 | 0,1 | 0,1 | 0,1 | 0,1 |
| dest. Wasser | 2,3 | 2,2 | 2,2 | 2,2 | 2,3 | 2,3 |
| Desmodur N3400 | 13,0 | 12,9 | 12,9 | 12,9 | 13,5 | - |
| Carbodiimid 1 | 1,1 | - | 1,1 | - | - | 7,0 |
| Carbodiimid 2 | - | 1,2 | - | - | - | - |
| Denacol EX-411 | - | - | 1,0 | 2,8 | - | - |
| Ethoxiethylpropionat | 3,2 | 3,2 | 3,2 | 3,2 | 3,2 | 6,1 |
| destilliertes Wasser | 12,0 | 12,7 | 11,8 | 11,1 | 11,0 | 12,5 |
| FK (%) | 40 | 39 | 41 | 41 | 39 | 39 |
| Lösemittel (%) | 12,2 | 12,2 | 12,0 | 12,0 | 12,0 | 14,0 |
| Viskosität (DIN 4 Becher)s | 23 | 22 | 23 | 24 | 25 | 22 |

Tabelle 2: Prüfergebnisse

| | | Beispiel 1 vor Belastung | Beispiel 1 nach Belastung | Beispiel 2 vor Belastung | Beispiel 2 nach Belastung | Beispiel 3 vor Belastung | Beispiel 3 nach Belastung | Beispiel 4 vor Belastung | Beispiel 4 nach Belastung | Vgl.-beispiel 1 vor Belastung | Vgl.-beispiel 1 nach Belastung | Vgl.-beispiel 2 vor Belastung | Vgl.-beispiel 2 nach Belastung |
|---|---|---|---|---|---|---|---|---|---|---|---|---|---|
| Festkörper[1)] | | 40 % | | 39 % | | 41 % | | 41 % | | 39 % | | 39 % | |
| Schichtdicke (µm)[2)] | | 50 | | 50 | | 50 | | 50 | | 50 | | 50 | |
| KK-Test[3)] | Blasen | m0/g0 | m1/g1 | m0/g0 | m2/g1 | m0/g0 | m1/g1 | m0/g0 | m2/g1 | m0/g0 | m2/g2 | m0/g0 | m3/g3 |
| (3 Tage) | Anquellen | 0 | 4 | 0 | 4 | 0 | 2 | 0 | 4 | 0 | 5 | 0 | 5 |
| | Nester | 0 | 0 | 0 | 0 | 0 | 0 | 0 | 0-1 | 0 | 1 | 0 | 1 |
| KK-Test[3)] | Blasen | m0/g0 | m2/g1 | m0/g0 | m3/g3 | m0/g0 | m2/g1 | m0/g0 | m3/g3 | m0/g0 | m4/g3 | m0/g0 | m5/g3 |
| (10 Tage) | Anquellen | 0 | 5 | 0 | 5 | 0 | 3 | 0 | 5 | 0 | 5 | 0 | 5 |
| | Nester | 0 | 0 | 0 | 0 | 0 | 0 | 0 | 1 | 0 | 2 | 0 | 3 |
| WS-Test[4)] | Blasen | m0/g0 | m0/g0 | m0/g0 | m0/g0 | m0/g0 | m0/g0 | m0/g0 | m1/g1 | m0/g0 | m1/g1 | m0/g0 | m3/g2[4)] |
| (5 Runden) | Anquellen | 0 | 2-3 | 0 | 2-3 | 0 | 1-2 | 0 | 3 | 0 | 3-4 | 0 | 4 [4)] |
| Pendelhärte König | RT | 105 | | 97 | | 118 | | 119 | | 103 | | 55 | |
| | 30′ 60°C | 126 | | 120 | | 145 | | 148 | | 126 | | 74 | |

Erläuterungen zur Tabelle 2

1) Der Applikationsfestkörper wurde bestimmt bei 1 h 130°C in Gew.-%

2) Angegeben ist die Schichtdicke der transparenten, ausgehärteten Deckschicht.

3) Der Konstantklimatest wurde 240 h bei 40°C Konstantklima nach DIN 50 017 durchgeführt.

4) Der Wassersprühtest wurde ausgeführt, indem die beschichteten Substrate 240 h bei 20°C mit deionisiertem Wasser besprüht wurden. Hierbei wird pro Stunde jeweils 5 Minuten mit deionisiertem Wasser besprüht. Nach 48 h Belastung wurde jeweils 24 h bei 20°C regeneriert, ehe ein neuer Belastungscyclus von 48 h Belastung folgte. Im Vergleichsbeispiel 2 wurde der Test bereits nach 2 Runden abgebrochen, in den Beispielen 1, 2, 3 und 4 sowie dem Vergleichsbeispiel 1 ist das Ergebnis nach 5 Runden angegeben.

## Patentansprüche

1. Wäßriges Mehrkomponenten-Polyurethan-Beschichtungsmittel, enthaltend:

   A) ein wasserverdünnbares, Hydroxyl- und Carboxylat-und/oder Sulfonatgruppen aufweisendes Polyadditionsharz (A1) und/oder Polykondensationsharz (A2) mit einer OH-Zahl von 40 bis 200 mg KOH/g, vorzugsweise 60 bis 140 mg KOH/g, einer Säurezahl von 15 bis 100 mg KOH/g, vorzugsweise 25 bis 50 mg KOH/g, und einer Glasübergangstemperatur von -40°C bis +60°C, vorzugsweise -20°C bis +40°C,

   B) eine von Carbodiimidgruppen freie Polyisocyanatkomponente (B) mit aliphatisch, cycloaliphatisch und/oder araliphatisch gebundenen freien Isocyanatgruppen als Vernetzungsmittel und

   C) mindestens ein Zusatzmittel, enthaltend eine Carbodiimidkomponente (C), die einen Gehalt an Carbodiimidgruppen -N=C=N- von 2 bis 30 Gew.-%, im statistischen Mittel mindestens 0,8 Carbodiimidgruppen pro Molekül und 0 bis 25 Gew.-%, bezogen auf Feststoff, an chemisch eingebauten, innerhalb von Polyetherketten vorliegenden Ethylenoxid- und/oder Propylenoxideinheiten aufweist, und/oder
   eine Polyepoxidkomponente (D), jedoch nicht einen Epoxidharzester.

2. Beschichtungsmittel nach Anspruch 1, dadurch gekennzeichnet, daß die Carbodiimidkomponente (C) in einer

solchen Menge enthalten ist, daß das Gewichtsverhältnis von Bindemittelkomponente (A) zu Carbodiimid (C) zwischen 90 : 10 und 60 : 40, bevorzugt zwischen 85 : 15 und 70 . 30 liegt, und/oder daß die Polyepoxidkomponente (D) in einer solchen Menge enthalten ist, daß das Gewichtsverhältnis von Bindemittelkomponente (A) zu Polyepoxid (D) zwischen 90 : 10 und 60 : 40, bevorzugt zwischen 85 : 15 und 70 : 30 liegt, wobei die Gewichtsverhältnisse jeweils auf Feststoff bezogen sind.

**3.** Beschichtungsmittel nach einem der Ansprüche 1 oder 2, dadurch gekennzeichnet, daß die Carbodiimidkomponente einen Gehalt an Carbodiimidgruppen - N=C=N-von 5 bis 15 Gew.-%, im statistischen Mittel 1 bis 25 Carbodiimidgruppen pro Molekül und 2 bis 20 Gew. -%, bezogen auf Feststoff, an chemisch eingebauten, innerhalb von Polyetherketten vorliegenden Ethylenoxid- und/oder Propylenoxideinheiten aufweist.

**4.** Beschichtungsmittel nach einem der Ansprüche 1 bis 3, dadurch gekennzeichnet, daß die Carbodiimidkomponente (C) hergestellt worden ist durch Umsetzung mindestens eines aliphatischen und/oder cycloaliphatischen Di-und/ oder Polyisocyanates mit Ethylen- und/oder Propylenoxideinheiten aufweisenden Alkoholen.

**5.** Beschichtungsmittel nach Anspruch 4, dadurch gekennzeichnet, daß die Carbodiimidkomponente (C) hergestellt worden ist unter Verwendung von Tetramethylenxylylendiisocyanat als alleiniger Isocyanatkomponente oder zumindest als eines der Diund/ oder Polyisocyanate .

**6.** Beschichtungsmittel nach einem der Ansprüche 1 bis 5, dadurch gekennzeichnet, daß es als Zusatzmittel eine Carbodiimidkomponente (C) oder eine Mischung einer Carbodiimidkomponente (C) und einer Polyepoxidkomponente (D) enthält.

**7.** Beschichtungsmittel nach einem der Ansprüche 1 bis 6, dadurch gekennzeichnet, daß es als Polyepoxidkomponente (D) ein aliphatisches, cycloaliphatisches und/oder aromatisches Polyepoxid enthält.

**8.** Beschichtungsmittel nach einem der Ansprüche 1 bis 7, dadurch gekennzeichnet, daß es als Bindemittelkomponente (A) ein wasserverdünnbares Polyacrylatharz (A1) enthält, das erhältlich ist, indem in einem organischen Lösemittel oder Lösemittelgemisch und in Gegenwart mindestens eines Polymerisationsinitiators

a1) ein von (a2), (a3), (a4), (a5) und (a6) verschiedener, mit (a2), (a3), (a4), (a5) und (a6) copolymerisierbarer, im wesentlichen carboxylgruppenfreier (Meth)acrylsäureester oder ein Gemisch aus solchen Monomeren,

a2) ein mit (a1), (a2), (a3), (a4), (a5) und (a6) copolymerisierbares, von (a5) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,

a3) ein mindestens eine Carboxylgruppe pro Molekül tragendes, mit (a1), (a2), (a4), (a5), und (a6) copolymerisierbares, ethylenisch ungesättigten Monomer oder ein Gemisch aus solchen Monomeren und

a4) ggf. ein oder mehrere Vinylester, von in α-Stellung verzweigten Monocarbonsäuren mit 5 bis 18 C-Atomen je Molekül und/oder

a5) ggf. mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äguivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,

a6) ggf. ein mit (a1), (a2), (a3), (a4), und (a5) copolymerisierbares, von (a1), (a2), (a3), (a4) und (a5) verschiedenes, im wesentlichen carboxylgruppenfreies, ethylenisch ungesättigtes Monomer oder ein Gemisch aus solchen Monomeren polymerisiert werden und nach Beendigung der Polymerisation das erhaltene Polyacrylatharz zumindest teilweise neutralisiert und in Wasser dispergiert wird, wobei (a1), (a2), (a3), (a4), (a5) und (a6) in Art und Menge so ausgewählt werden, daß das Polyacrylatharz (A1) die gewünschte OH-Zahl, Säurezahl und Glasübergangstemperatur aufweist.

**9.** Wäßriges Beschichtungsmittel nach Anspruch 8, dadurch gekennzeichnet, daß das wasserverdünnbare Polyacrylatharz (A1) erhältlich ist, indem

(I) ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,

(II) nachdem mindestens 60 Gew.-% des aus (a1), (a2), (a4), (a5) und ggf. (a6) bestehenden Gemisches zugegeben worden sind, (a5) und der gegebenenfalls vorhandene Rest der Komponenten (a1), (a2), (a4), (a5) und (a6) zugegeben werden und weiter polymerisiert wird und

(III) nach Beendigung der Polymerisation das erhaltene Polyacrylatharz zumindest teilweise neutralisiert und in Wasser dispergiert wird.

**10.** Wäßriges Beschichtungsmittel nach einem der Ansprüche 8 oder 9, dadurch gekennzeichnet, daß die Komponente (a2) als Monomer Trimethylolpropanmonoallylether enthält und/oder daß als Komponente (a4) ein oder mehrere Vinylester von in $\alpha$-Stellung verzweigten, gesättigten aliphatischen Monocarbonsäuren mit 9 bis 11 C-Atomen eingesetzt worden sind und/oder daß als Komponente (a5) das Umsetzungsprodukt von Acryl- und/oder Methacrylsäure mit dem Glycidylester der Versaticsäure oder anstelle des Umsetzungsproduktes eine äquivalente Menge Acryl- und/oder Methacrylsäure, die dann während oder nach der Polymerisationsreaktion mit dem Glycidylester der Versaticsäure umgesetzt wird, eingesetzt worden ist.

**11.** Wäßriges Beschichtungsmittel nach einem der Ansprüche 8 bis 10, dadurch gekennzeichnet, daß das wasserverdünnbare Polyacrylatharz (Al) erhältlich ist aus

a1) 20 bis 60 Gew.-%, bevorzugt 30 bis 50 Gew.-%, der Komponente (a1)

a2) 10 bis 40 Gew.-%, bevorzugt 15 bis 35 Gew.-%, der Komponente (a2)

a3) 1 bis 15 Gew.-%. bevorzugt 2 bis 8 Gew.-%, der Komponente (a3)

a4) 0 bis 25 Gew. -%, bevorzugt 2 bis 15 Gew.-%, der Komponente (a4)

a5) 0 bis 25 Gew. -%, bevorzugt 2 bis 15 Gew.-%, der Komponente (a5) und

a6) 5 bis 30 Gew.-%, bevorzugt 10 bis 20 Gew.-%, der Komponente (a6), wobei die Summe der Gewichtsanteile der Komponenten (a1) bis (a6) jeweils 100 Gew.-% beträgt.

**12.** Verfahren zur Herstellung eines wäßrigen Mehrkomponenten-Polyurethan-Beschichtungsmittels nach einem der Ansprüche 1 bis 11, dadurch gekennzeichnet, daß kurz vor der Applikation das isocyanatgruppenhaltige Vernetzungsmittel, die Carbodiimidkomponente und/oder die Polyepoxidkomponente und das wasserverdünnbare Polyadditionsharz und/oder Polykondensationsharz gemischt werden.

**13.** Verfahren nach Anspruch 12, dadurch gekennzeichnet, daß kurz vor der Applikation die Vernetzerkomponente (I), die das isocyanatgruppenhaltige Vernetzungsmittel, die Carbodiimidkomponente und/oder die Polyepoxidkomponente enthält, und eine Bindemittelkomponente (II), die das wasserverdünnbare Polyadditionsharz und/oder Polykondensationsharz enthält, gemischt werden.

**14.** Verfahren zur Herstellung eines mehrschichtigen, schützenden und/oder dekorativen Überzugs auf einer Substratfläche, bei dem

(1) eine pigmentierte Basisbeschichtungszusammensetzung auf die Substratoberfläche aufgebracht wird,

(2) aus der in Stufe (1) aufgebrachten Zusammensetzung ein Polymerfilm gebildet wird,

(3) auf die so erhaltene Basisschicht eine ein wasserverdünnbares Polyacrylatharz als Bindemittel und ein Polyisocyanat als Vernetzungsmittel enthaltende transparente wäßrige Deckbeschichtungszusammensetzung aufgebracht wird und anschließend

(4) die Basisschicht zusammen mit der Deckschicht gehärtet wird,

dadurch gekennzeichnet, daß als Deckbeschichtungszusammensetzung ein wäßriges Beschichtungsmittel nach

einem der Ansprüche 8 bis 11 aufgebracht wird.

**15.** Verwendung der wäßrigen Beschichtungsmittel nach einem der Ansprüche 1 bis 11 im Bereich der Autoreparaturlackierung, insbesondere als Decklack

**16.** Verwendung eines wäßrigen Beschichtungsmittels nach einem der Ansprüche 1 bis 11 als pigmentierte Basislacke oder als Klarlacke in einem Verfahren zur Herstellung einer mehrschichtigen Lackierung.

**17.** Verwendung eines wäßrigen Beschichtungsmittels nach einem der Ansprüche 1 bis 11 als Füller.

**18.** Verwendung eines wäßrigen Beschichtungsmittels nach einem der Ansprüche 1 bis 11 zur Herstellung einschichtiger Decklackierungen.

## Claims

**1.** Aqueous multicomponent polyurethane coating composition comprising

A) a water-dilutable polyaddition resin (A1) and/or polycondensation resin (A2) containing hydroxyl and carboxylate and/or sulfonate groups and having an OH number of from 40 to 200 mg of KOH/g, preferably from 60 to 140 mg of KOH/g, an acid number of from 15 to 100 mg of KOH/g, preferably from 25 to 50 mg of KOH/g, and a glass transition temperature of from

- 40°C to +60°C, preferably from -20°C to +40°C,

B) a polyisocyanate component (B) which is free from carbodiimide groups and has free isocyanate groups which are bonded to aliphatic, cycloaliphatic and/or araliphatic structures as crosslinking agent and

C) at least one additive, containing a carbodiimide component (C) which has a content of carbodiimide groups -N=C=N- of from 2 to 30% by weight, on average at least 0.8 carbodiimide groups per molecule and from 0 to 25% by weight, based on solids, of chemically incorporated ethylene oxide and/or propylene oxide units which are present within polyether chains, and/or
a polyepoxide component (D), but not an epoxy resin ester.

**2.** Coating composition according to claim 1, characterized in that the carbodiimide component (C) is contained in an amount such that the weight ratio of binder component (A) to carbodiimide (C) is between 90:10 and 60:40, preferably between 85:15 and 70:30, and/or in that the polyepoxide component (D) is contained in an amount such that the weight ratio of binder component (A) to polyepoxide (D) is between 90:10 and 60:40, preferably between 85:15 and 70:30, the weight ratios being based in each case on solids.

**3.** Coating composition according to either of claims 1 and 2, characterized in that the carbodiimide component has a content of carbodiimide groups -N=C=N- of from 5 to 15% by weight, on average from 1 to 25 carbodiimide groups per molecule and from 2 to 20% by weight, based on solids, of chemically incorporated ethylene oxide and/or propylene oxide units present within polyether chains.

**4.** Coating composition according to one of claims 1 to 3, characterized in that the carbodiimide component (C) has been prepared by reacting at least one aliphatic and/or cycloaliphatic di- and/or polyisocyanate with alcohols containing ethylene oxide and/or propylene oxide units.

**5.** Coating composition' according to claim 4, characterized in that the carbodiimide component (C) has been prepared using tetramethylenexylylenediisocyanate as the sole isocyanate component or at least as one of the di- and/or polyisocyanates.

**6.** Coating composition according to one of claims 1 to 5, characterized in that it contains as an additive a carbodiimide component (C) or a mixture of a carbodiimide component (C) and a polyepoxide component (D).

**7.** Coating composition according to one of claims 1 to 6, characterized in that it contains as polyepoxide component (D) an aliphatic, cycloaliphatic and/or aromatic polyepoxide.

**8.** Coating composition according to one of claims 1 to 7, characterized in that it contains as binding component (A) a water-dilutable polyacrylate resin (A1) which can be obtained by polymerizing, in an organic solvent or solvent mixture and in the presence of at least one polymerization initiator

a1) a (meth)acrylate which is different from (a2), (a3), (a4), (a5) and (a6), is copolymerizable with (a2), (a3), (a4), (a5) and (a6) and is essentially free from carboxyl groups, or a mixture of such monomers,

a2) an ethylenically unsaturated monomer which is copolymerizable with (a1), (a3), (a4), (a5) and (a6), is different from (a5), carries at least one hydroxyl group per molecule and is essentially free from carboxyl groups, or a mixture of such monomers,

a3) an ethylenically unsaturated monomer which carries at least one carboxyl group per molecule and is copolymerizable with (a1), (a2), (a4), (a5) and (a6), or a mixture of such monomers, and

a4) if desired one or more vinyl esters of a-branched monocarboxylic acids having from 5 to 18 carbon atoms per molecule, and/or

a5) if desired at least one reaction product of acrylic acid and/or methacrylic acid with the glycidyl ester of an $\alpha$-branched monocarboxylic acid having from 5 to 18 carbon atoms per molecule, or, instead of the reaction product, an equivalent amount of acrylic and/or methacrylic acid which is then reacted during or after the polymerization reaction with the glycidyl ester of an $\alpha$-branched monocarboxylic acid having from 5 to 18 carbon atoms per molecule,

a6) if desired an ethylenically unsaturated monomer which is copolymerizable with (a1), (a2), (a3), (a4) and (a5), is different from (a1), (a2), (a3), (a4) and (a5) and is essentially free from carboxyl groups, or a mixture of such monomers,

and, after the end of the polymerization, at least partially neutralizing the resulting polyacrylate resin and dispersing it in water, the nature and quantity of (a1), (a2), (a3), (a4), (a5) and (a6) being selected such that the polyacrylate resin (A1) has the desired OH number, acid number and glass transition temperature.

**9.** Aqueous coating composition according to claim 8, characterized in that the water-dilutable polyacrylate resin (A1) can be obtained by

(I) polymerizing a mixture of (a1), (a2), (a4), (a5) and (a6), or a mixture of part-amounts of components (a1), (a2), (a4), (a5) and (a6) in an organic solvent,

(II) after at least 60% by weight of the mixture composed of (a1), (a2), (a4), (a5) and if desired (a6) have been added, adding (a5) and any remaining amount of components (a1), (a2), (a4), (a5) and (a6) and continuing polymerization, and

(III)after the end of the polymerization, at least partially neutralizing the resulting polyacrylate resin and dispersing it in water.

**10.** Aqueous coating composition according to either of claims 8 and 9, characterized in that component (a2) contains as monomer trimethylolpropane monoallyl ether and/or in that one or more vinyl esters of $\alpha$-branched, saturated aliphatic monocarboxylic acids having from 9 to 11 carbon atoms have been employed as component (a4) and/or in that the reaction product of acrylic and/or methacrylic acid with the glycidyl ester of Versatic acid or, instead of the reaction product, an equivalent amount of acrylic and/or methacrylic acid which is then reacted during or after the polymerization reaction with the glycidyl ester of Versatic acid has been employed as component (a5).

**11.** Aqueous coating composition according to one of claims 8 to 10, characterized in that the water-dilutable polyacrylate resin (A1) can be obtained from

(a1) from 20 to 60% by weight, preferably from 30 to 50% by weight, of component (a1)

(a2) from 10 to 40% by weight, preferably from 15 to 35% by weight, of component (a2)

(a3) from 1 to 15% by weight, preferably from 2 to 8% by weight, of component (a3)

(a4) from 0 to 25% by weight, preferably from 2 to 15% by weight, of component (a4)

(a5) from 0 to 25% by weight, preferably from 2 to 15% by weight, of component (a5) and

(a6) from 5 to 30% by weight, preferably from 10 to 20% by weight, of component (a6), the sum of the proportions by weight of components (a1) to (a6) being in each case 100% by weight.

**12.** Process for the preparation of an aqueous multicomponent polyurethane coating composition according to one of claims 1 to 11, characterized in that shortly before application the isocyanate group-containing crosslinking agent, the carbodiimide component and/or the polyepoxide component and the water-dilutable polyaddition resin and/or polycondensation resin are mixed.

**13.** Process according to claim 12, characterized in that shortly before application a crosslinking component (I) which contains the isocyanate group-containing crosslinking agent, the carbodiimide component and/or the polyepoxide component, and a binder component (II) which contains the water-dilutable polyaddition resin and/or polycondensation resin, are mixed.

**14.** Method of producing a multilayer, protective and/or decorative coating on a substrate surface, in which

(1) a pigmented basecoat composition is applied to the substrate surface,

(2) a polymer film is formed from the composition applied in stage (1),

(3) a transparent aqueous top coat composition comprising a water-dilutable polyacrylate resin as binder and a polyisocyanate as crosslinking agent is applied to the resulting basecoat, and subsequently

(4) the basecoat is cured together with the top coat,

characterized in that the top coat composition applied is an aqueous coating composition according to one of claims 8 to 11.

**15.** Use of the aqueous coating compositions according to one of claims 1 to 11 in the automotive refinishing sector, in particular as top coat.

**16.** Use of an aqueous coating composition according to one of claims 1 to 11 as pigmented basecoats or as clearcoats in a process for the production of a multilayer finish.

**17.** Use of an aqueous coating composition according to one of claims 1 to 11 as primer-surfacers.

**18.** Use of an aqueous coating composition according to one of claims 1 to 11 for producing one-coat top coats.

**Revendications**

**1.** Composition de revêtement aqueuse multicomposants en polyuréthanne, comprenant :

A) une résine de polyaddition (A1) et/ou une résine de polycondensation (A2) diluable à l'eau, renfermant des groupes hydroxy et carboxylate et/ou sulfonate, ayant un indice OH de 40 à 200 mg KOH/g, de préférence de 60 à 140 mg KOH/g, un indice d'acide de 15 à 100 mg KOH/g, de préférence de 25 à 50 mg KOH/g, et une température de transition vitreuse de -40°C à +60°C, de préférence de -20°C à +40°C,
B) un composant polyisocyanate dépourvu de groupes carbodiimide (B) ayant des groupes isocyanate libres liés à une structure aliphatique, cycloaliphatique et/ou araliphatique, en tant qu'agent de réticulation et
C) au moins un additif comprenant un composant carbodiimide (C) présentant une teneur en groupes carbodiimide -N=C=N- de 2 à 30 pour cent en poids, en moyenne statistique au moins 0,8 groupe carbodiimide par molécule et de 0 à 25 pour cent en poids, par rapport aux matières solides, de motifs oxyde d'éthylène et/ou oxyde de propylène incorporés chimiquement, qui sont présents dans des chaînes de polyéther, et/ou

un composant polyépoxyde (D) mais pas
un ester de résine époxy.

**2.** Composition de revêtement selon la revendication 1, caractérisée en ce que le composant carbodiimide (C) est présent en une quantité telle que le rapport pondéral entre le composant liant (A) et le carbodiimide (C) soit compris entre 90:10 et 60:40, de préférence entre 85:15 et 70:30, et/ou en ce que le composant polyépoxyde (D) est présent en une quantité telle que le rapport pondéral entre le composant liant (A) et le polyépoxyde (D) soit compris entre 90:10 et 60:40, de préférence entre 85:15 et 70:30, les rapports pondéraux étant dans chaque cas par rapport aux matières solides.

**3.** Composition de revêtement selon l'une quelconque des revendications 1 ou 2, caractérisée en ce que le composant carbodiimide présente une teneur en groupes carbodiimide -N=C=N- de 5 à 15 pour cent en poids, en moyenne statistique de 1 à 25 groupes carbodiimide par molécule et de 2 à 20 pour cent en poids, par rapport aux matières solides, de motifs oxyde d'éthylène et/ou oxyde de propylène incorporés chimiquement qui sont présents dans des chaînes de polyéther.

**4.** Composition de revêtement selon l'une quelconque des revendications 1 à 3, caractérisée en ce que le composant carbodiimide (C) a été préparé par réaction d'au moins un diisocyanate et/ou polyisocyanate aliphatique et/ou cycloaliphatique avec des alcools renfermant des motifs oxyde d'éthylène et/ou oxyde de propylène.

**5.** Composition de revêtement selon la revendication 4, caractérisée en ce que le composant carbodiimide (C) a été préparé en utilisant du diisocyanate de tétraméthylènexylylène en tant que composant isocyanate unique ou au moins en tant que l'un des diisocyanates et/ou polyisocyanates.

**6.** Composition de revêtement selon l'une quelconque des revendications 1 à 5, caractérisée en ce qu'elle comprend, en tant qu'additif, un composant carbodiimide (C) ou un mélange d'un composant carbodiimide (C) et d'un composant polyépoxyde (D).

**7.** Composition de revêtement selon l'une quelconque des revendications 1 à 6, caractérisée en ce qu'elle comprend, en tant que composant polyépoxyde (D), un polyépoxyde aliphatique, cycloaliphatique et/ou aromatique.

**8.** Composition de revêtement selon l'une quelconque des revendications 1 à 7, caractérisée en ce qu'elle comprend, en tant que composant liant (A), une résine de polyacrylate diluable à l'eau (A1) pouvant être obtenue en polymérisant, dans un solvant organique ou un mélange de solvants organiques et en présence d'au moins un amorceur de polymérisation,

a1) un ester (méth)acrylique essentiellement dépourvu de groupe carboxy, copolymérisable avec (a2), (a3), (a4), (a5) et (a6) et différent de (a2), (a3), (a4), (a5) et (a6), ou un mélange de tels monomères,
a2) un monomère éthyléniquement insaturé différent de (a5), copolymérisable avec (a1), (a2), (a3), (a4), (a5) et (a6), qui renferme au moins un groupe hydroxy par molécule et est essentiellement dépourvu de groupe carboxy, ou un mélange de tels monomères,
a3) un monomère éthyléniquement insaturé copolymérisable avec (a1), (a2), (a4), (a5) et (a6), renfermant au moins un groupe carboxy par molécule, ou un mélange de tels monomères,
a4) éventuellement un ou plusieurs esters vinyliques d'acides monocarboxyliques ramifiés en position a ayant de 5 à 18 atomes de carbone par molécule et/ou
a5) éventuellement au moins un produit de réaction de l'acide acrylique et/ou de l'acide méthacrylique avec l'ester glycidylique d'un acide monocarboxylique ramifié en position $\alpha$ ayant de 5 à 18 atomes de carbone par molécule, ou à la place du produit de réaction, une quantité équivalente d'acide acrylique et/ou méthacrylique, qui est alors mise à réagir, durant ou après la réaction de polymérisation, avec l'ester glycidylique d'un acide monocarboxylique ramifié en position a ayant de 5 à 18 atomes de carbone par molécule,
a6) éventuellement un monomère éthyléniquement insaturé essentiellement dépourvu de groupe carboxy, différent de (a1), (a2), (a3), (a4) et (a5) et copolymérisable avec (a1), (a2), (a3), (a4) et (a5), ou un mélange de tels monomères, et après la fin de la polymérisation, en neutralisant au moins partiellement la résine de polyacrylate obtenue et en la dispersant dans de l'eau, la nature et la quantité de (a1), (a2), (a3), (a4), (a5) et (a6) étant choisies de telle sorte que la résine de polyacrylate (A1) présente l'indice OH, l'indice d'acide et la température de transition vitreuse souhaités.

**9.** Composition de revêtement aqueuse selon la revendication 8, caractérisée en ce que la résine de polyacrylate

diluable à l'eau (A1) peut être obtenue

(I) en polymérisant dans un solvant organique un mélange de (a1), (a2), (a4), (a5) et (a6) ou un mélange de parties des composants (a1), (a2), (a4), (a5) et (a6),
(II) en ajoutant (a5) et le reste éventuellement présent des composants (a1), (a2), (a4), (a5) et (a6) et en poursuivant la polymérisation, après avoir ajouté au moins 60 pour cent en poids du mélange constitué de (a1), (a2), (a4), (a5) et éventuellement (a6), et
(III) après la fin de la polymérisation, en neutralisant au moins partiellement la résine de polyacrylate obtenue et en la dispersant dans de l'eau.

**10.** Composition de revêtement aqueuse selon l'une quelconque des revendications 8 ou 9, caractérisée en ce que le composant (a2) comprend de l'éther monoallylique de triméthylolpropane en tant que monomère et/ou en ce que l'on a utilisé, en tant que composant (a4), un ou plusieurs esters vinyliques d'acide monocarboxylique aliphatique saturé ramifié en position a, ayant de 9 à 11 atomes de carbone, et/ou en ce que l'on a utilisé, en tant que composant (a5), le produit de réaction de l'acide acrylique et/ou de l'acide méthacrylique avec l'ester glycidylique de l'acide versatique ou, au lieu du produit de réaction, une quantité équivalente d'acide acrylique et/ou méthacrylique, qui est alors mise à réagir avec l'ester glycidylique de l'acide versatique durant ou après la réaction de polymérisation.

**11.** Composition de revêtement aqueuse selon l'une quelconque des revendications 8 à 10, caractérisée en ce que la résine de polyacrylate diluable à l'eau (A1) peut être obtenue à partir de

a1) de 20 à 60 pour cent en poids, de préférence de 30 à 50 pour cent en poids, du composant (a1)
a2) de 10 à 40 pour cent en poids, de préférence de 15 à 35 pour cent en poids, du composant (a2)
a3) de 1 à 15 pour cent en poids, de préférence de 2 à 8 pour cent en poids, du composant (a3)
a4) de 0 à 25 pour cent en poids, de préférence de 2 à 15 pour cent en poids, du composant (a4)
a5) de 0 à 25 pour cent en poids, de préférence de 2 à 15 pour cent en poids, du composant (a5) et
a6) de 5 à 30 pour cent en poids, de préférence de 10 à 20 pour cent en poids, du composant (a6), la somme des proportions pondérales des composants (a1) à (a6) étant dans chaque cas de 100 pour cent en poids.

**12.** Procédé de préparation d'une composition de revêtement aqueuse multicomposants en polyuréthanne selon l'une quelconque des revendications 1 à 11, caractérisé en ce que peu avant l'application, l'agent de réticulation renfermant des groupes isocyanate, le composant carbodiimide et/ou le composant polyépoxyde et la résine de polyaddition et/ou la résine de polycondensation diluable à l'eau, sont mélangés.

**13.** Procédé selon la revendication 12, caractérisé en ce que peu avant l'application, le composant de réticulation (I), qui comprend l'agent de réticulation renfermant des groupes isocyanate, le composant carbodiimide et/ou le composant polyépoxyde, et un composant liant (II), qui comprend la résine de polyaddition et/ou la résine de polycondensation diluable à l'eau, sont mélangés.

**14.** Procédé de production d'un revêtement multicouches protecteur et/ou décoratif sur une surface de substrat, dans lequel

(1) on applique une composition de couche de fond pigmentée sur la surface de substrat,
(2) on forme un film polymère à partir de la composition appliquée à l'étape (1),
(3) on applique, sur la couche de fond ainsi obtenue, une composition de couche de finition aqueuse transparente comprenant une résine de polyacrylate diluable à l'eau en tant que liant et un polyisocyanate en tant qu'agent de réticulation, et ensuite
(4) on durcit conjointement la couche de fond et la couche de finition,

caractérisé en ce que l'on applique, en tant que composition de couche de finition, une composition de revêtement aqueuse selon l'une quelconque des revendications 8 à 11.

**15.** Utilisation des compositions de revêtements aqueuses selon l'une quelconque des revendications 1 à 11 dans le domaine des retouches d'automobiles, en particulier en tant que couche de finition.

**16.** Utilisation d'une composition de revêtement aqueuse selon l'une quelconque des revendications 1 à 11 en tant que couches de fond pigmentées ou en tant que couches transparentes dans un procédé de production d'un

revêtement multicouches.

**17.** Utilisation d'une composition de revêtement aqueuse selon l'une quelconque des revendications 1 à 11 en tant que charge.

**18.** Utilisation d'une composition de revêtement aqueuse selon l'une quelconque des revendications 1 à 11 pour la production de revêtements de finition monocouches.